# EUROPEAN PATENT SPECIFICATION

(11) **EP 2 966 095 B1**
(45) Date of publication and mention of the grant of the patent: **03.05.2017**
(21) Application number: 15181294.8
(22) Date of filing: 08.02.2012
(51) Int. Cl.: C08F 2/44, B05D 7/02, B32B 27/32

(54) **PROCESS OF PRODUCING RESIN COMPOSITION FOR COATING MEMBERS**
VERFAHREN ZUR HERSTELLUNG EINER HARZZUSAMMENSETZUNG ZUR BESCHICHTUNG VON ELEMENTEN
PROCÉDÉ DE PRODUCTION D'UNE COMPOSITION DE RÉSINE POUR REVÊTEMENT D'ÉLÉMENTS

(30) Priority: 02.03.2011 JP 2011045552; 14.04.2011 JP 2011090331
(43) Date of publication of application: 13.01.2016
(62) Divisional of application: 12752936.0
(73) Proprietor: Adeka Corporation, Tokyo 116-0012 (JP)
(72) Inventor: KAWAMOTO, Naoshi, Saitama-shi, Saitama 336-0022 (JP); URUSHIHARA, Tsuyoshi, Saitama-shi, Saitama 336-0022 (JP); OKAMOTO, Kohei, Saitama-shi, Saitama 336-0022 (JP); SEGUCHI, Tetsuya, Saitama-shi, Saitama 336-0022 (JP)
(74) Representative: Gill Jennings & Every LLP

(56) References cited:
- EP-A1- 1 857 468
- EP-A1- 2 281 825
- WO-A1-2010/087064
- JP-A- 2005 206 625
- JP-A- 2006 052 241

## Description

### TECHNICAL FIELD

The present invention relates to a method of producing a laminate film. More particularly, the present invention relates to a method of producing a laminate film which can yield a laminate film having excellent adhesion with a laminate base material and reduce the amount of an anchor coating agent or an adhesive for dry lamination to be used.

Further, the present invention also relates to a method of producing a resin composition for a coated member which comprises a polymer obtained by polymerization of a monomer having an ethylenically unsaturated bond and a thermoplastic elastomer. More particularly, the present invention relates to a method of producing a resin composition for a coated member, by which a resin composition for a coated member, which shows excellent adhesion with a coating film after a plasma treatment and can have suppressed yellowing, can be produced.

### BACKGROUND ART

As the use of a laminate film, packaging materials utilizing a film made of a thermoplastic resin have been conventionally proposed, and there are known laminate films in which an olefin resin film is laminated on a laminate base material of polyester, polyamide, metallic foil or the like by press-adhesion with heating (heat sealing) or application of an adhesive. Among olefin resins, in particular, polyethylene is widely used in the food packaging material applications since it is inexpensive and easily processable and exhibits excellent blocking of water vapor.

However, an olefin resin itself is inert and has poor adhesive force; therefore, for example, in Patent Document 1, a method of producing a laminate film by subjecting the surface of a laminate base material to an anchor coating treatment with an anchoring agent such as a polyurethane or an isocyanate compound and then laminating an ozone-treated olefin resin thereon is proposed.

There have been also proposed several methods of producing a laminate film without using an anchor coating agent and, for example, in Patent Document 2, a method of improving the adhesion of a film by subjecting the film to an ozone treatment under a specific condition is disclosed.

By the way, olefin resins have poor stability against heat and light and are thus easily oxidized/degraded when exposed to a high-temperature environment or a strong light, so that the service life required as a plastic product cannot be attained. In order to prevent such oxidation/degradation, a stabilizer such as a phenolic antioxidant, a phosphorus-based antioxidant, a sulfur-based antioxidant, a hydroxylamine compound, a hindered amine compound, an ultraviolet absorber or an acid scavenger is commonly added. In particular, a phenolic antioxidant is widely utilized because of its high thermostability effect in high-temperature processing.

Examples of a method of adding a stabilizer to an olefin resin include a method in which an olefin resin obtained by polymerization of an olefin monomer and is mixed with a stabilizer and the resulting mixture is melt-kneaded using a processing equipment such as an extruder to disperse the stabilizer in the olefin resin; and a method in which a stabilizer is added before or during polymerization of an olefin monomer. Such a method of blending an olefin resin and a stabilizer by melt-kneading has a problem in that the stabilizer must be added in an amount more than necessary in order to mitigate the defective dispersion of the stabilizer in the olefin resin.

As a method of adding a stabilizer before or during polymerization of an olefin monomer, for example, Patent Document 3 discloses a production method in which an α-olefin is polymerized in the presence of a phosphorus-based antioxidant. It is shown that a polymer obtained by polymerizing an α-olefin in the presence of a phosphorus-based antioxidant can attain superior stabilization effect as compared to a case where a phosphorus-based antioxidant is not used at the time of performing polymerization but is added to a polymer obtained by polymerization of an α-olefin.

Further, in Patent Document 4, it is shown that, by using a specific phosphorus-based antioxidant at the time of polymerizing an olefin, the polymerization is not inhibited and a polymer in which coloration caused by contact with water is suppressed can be obtained.

Meanwhile, in cases where a phenolic antioxidant-containing stabilizer is added before the polymerization of an olefin monomer, since phenol reduces the catalytic activity of an olefin polymerization catalyst, there are problems that the resulting olefin resin is colored and a desired polymerization cannot be achieved.

Further, while a phenolic antioxidant can provide high thermostability in high-temperature processing of an olefin resin, when a molded article of an olefin resin is immersed in water or a solvent such as alcohol, there are cases where the blended phenolic antioxidant elutes out of the molded article.

As a polymerization method in which a phenolic antioxidant is prevented from reducing the catalytic activity of a polymerization catalyst, for example, in Patent Documents 5 and 6, it is shown that inhibition of a polymerization catalyst can be suppressed by adding a phenolic antioxidant masked with an organoaluminum compound before or during polymerization of a monomer having an ethylenically unsaturated bond.

Moreover, an olefin resin obtained by polymerization of a monomer having an ethylenically unsaturated bond is inexpensive, has a low specific gravity and a high rigidity, exhibits good moldability and thus can be molded into a large molded article; therefore, such an olefin resin has been increasingly utilized in a variety of applications. In automobile applications, the use of such an olefin resin has been expanding to structural members and the like, examples of which include exterior parts such as bumpers; interior parts such as instrument panels and trims; engine room interior components such as fan casings; and a variety of module materials.

In general, such resin compositions used in automobile interior and exterior parts such as bumpers are produced by blending, as required, for example, an olefin resin, an elastomer, an inorganic filler, a pigment such as carbon black, a light stabilizer, an ultraviolet absorber, a hindered phenol-based antioxidant, a phosphorus-based antioxidant, a sulfur-based antioxidant and a lactone-based antioxidant.

Conventionally, bumpers are generally provided as unpainted or completely painted products; however, in recent years, in accordance with design requirements, bumpers have been widely provided in a partially unpainted condition. Therefore, it is demanded not only that a resin composition for a bumper have good weathering resistance and good adhesion with a coating film, but also that the bumper and its coating film be not discolored even when exposed to heat, sunlight and the like.

In general, in order to improve the weathering resistance and photostability of a molded article of an olefin resin, a variety of additives such as an antioxidant, a hindered amine-based light stabilizer and an ultraviolet absorber are blended; however, there is a problem in that such additives blended in an olefin resin are strongly affected by heat and sunlight and diffuse, migrate or bleed out from the resin to a coating film, thereby causing yellowing of the coating film. In particular, it is known that a phenolic antioxidant is converted into quinoline after bleeding out and causes yellowing of a coating film.

In order to inhibit the above-described yellowing of a coating film, for example, a method of preventing diffusion, migration and bleeding-out of additives by overcoating the coating film with an acryl-melamine system, a two-component urethane system, a polyester-melamine system, a polyester-urethane system or the like can be employed; however, even after the overcoating, a coating color of a high brightness (L value of 60 or higher) may cause yellowing of the coating film under natural environment. Further, by this method, a partially unpainted bumper cannot be obtained.

Meanwhile, Patent Documents 7 and 8 propose methods of inhibiting yellowing of a painted bumper with specific amounts and types of an antioxidant and a light stabilizer.

In addition, Patent Document 9 proposes a method in which specific four types of antioxidants and, as required, a benzoate-based light stabilizer and a hindered amine-based light stabilizer are blended into a polypropylene resin composition which contains a specific propylene-ethylene block copolymer, elastomer and inorganic filler.

Patent Documents 6, 10 and 11 describe methods in which a phenolic antioxidant masked with an organoaluminum compound is added before or during polymerization of a monomer having an ethylenically unsaturated bond.

### RELATED ART DOCUMENTS

### PATENT DOCUMENTS

Patent Document 1: Japanese Unexamined Patent Application Publication No. S61-283533
Patent Document 2: Japanese Unexamined Patent Application Publication No. S63-49423
Patent Document 3: Japanese Unexamined Patent Application Publication No. S63-92613
Patent Document 4: Japanese Unexamined Patent Application Publication No. H8-208731
Patent Document 5: Japanese Unexamined Patent Application Publication No. 2006-52241
Patent Document 6: Japanese Unexamined Patent Application Publication No. 2006-282985
Patent Document 7: Japanese Unexamined Patent Application Publication No. H6-107897
Patent Document 8: Japanese Unexamined Patent Application Publication No. H7-179719
Patent Document 9: Japanese Unexamined Patent Application Publication No. 2003-29270
Patent Document 10: Japanese Unexamined Patent Application Publication No. 2005-206625
Patent Document 11: Japanese Unexamined Patent Application Publication No. 2005-255953

### SUMMARY OF THE INVENTION

### PROBLEMS TO BE SOLVED BY THE INVENTION

However, some of the anchor coating agents used in an anchor coating treatment contain, as a diluent, an organic solvent such as ethyl acetate, toluene or methyl ethyl ketone and such anchor coating agents have problems relating to deterioration of work environment due to vaporization of the solvent and disaster prevention, as well as a problem that, if the adhesive is not sufficiently dried, the organic solvent remains in the laminate film and gives odor to its contents.

In addition, in cases where, as a content, a liquid containing a component such as water, edible oil or alcohol is filled and packaged by a laminate film, there has been indicated a problem that elution or the like of an anchor coating agent component caused by the permeability of the liquid reduces the interlayer adhesion strength of the laminate film and detachment thus occurs between the film layers.

Furthermore, the method according to Patent Document 2 has a problem that, due to the high melt-extrusion temperature, the resin and the blended additives are degraded to cause odor in the contents.

Meanwhile, in Patent Documents 5 and 6, the application of the methods to a laminate film is not examined and neither the adhesive property of a laminate film nor the elution of the additives after film formation is examined at all.

In view of the above, an object of the present invention is to provide a method of producing a laminate film by which a laminate film having excellent adhesion with a laminate base material, in which laminate film the amount of elution of an additive into a solvent is small, can be produced.

Further, there is still a room for improvement with regard to the problem of coloration of a coated member. Moreover, in cases where a molded article is subjected to a plasma treatment and then coated, in the above-described methods of Patent Documents 7 to 9, there is a problem that the additive(s) blended after the plasma treatment elute out to the surface of the resulting molded article and the adhesion of the coating film is thereby impaired.

Therefore, another object of the present invention is to provide a method of producing a resin composition for a coated member, by which a resin composition for a coated member which shows good secondary adhesion with a coating film and good heat-yellowing resistance can be obtained.

### MEANS FOR SOLVING THE PROBLEMS

In view of the above-described current circumstances, the present inventors intensively studied to discover that the above-described problems can be solved by using a polyolefin stabilized by an addition of a specific phenolic antioxidant before or during polymerization of an ethylenically unsaturated monomer, thereby completing the present invention.

In addition, the present inventors also discovered that the above-described problems can be solved by adding a specific stabilizer before or during polymerization of a monomer having an ethylenically unsaturated bond, thereby completing the present invention.

Due to the recent advancements in the polymerization technologies, it is now possible to obtain a stabilized polymer by performing polymerization with an addition of a stabilizer composition to a polymerization catalyst, a polymerization apparatus or a piping thereof. This method can omit the step of blending a stabilizer composition by post-polymerization melt-kneading and allows the stabilizer to be uniformly dispersed in the resulting polymer; therefore, the amount of the stabilizer to be blended can be consequently reduced. However, since a phenol compound adversely affects the polymerization catalyst to impair the polymerization, a stabilizer composition containing a phenolic antioxidant could not be added in the polymerization step.

The present inventors have proposed methods in which, by using a phenolic antioxidant masked with an organoaluminum compound, even when the phenolic antioxidant is added before or during polymerization of a monomer having an ethylenically unsaturated bond, the resulting polymer is stabilized without impairing the activity of a polymerization catalyst even when the phenolic antioxidant is added before or during the polymerization (Patent Documents 6, 10 and 11).

When the present inventors, based on these findings, added a specific phenolic antioxidant masked with an organoaluminum compound before or during polymerization of a monomer having an ethylenically unsaturated bond, it was revealed that the resulting resin composition had good adhesion with a coating film and good heat-yellowing resistance.

The method of producing a resin composition for a coated member according to the present invention is a method of producing a resin composition for a coated member, which resin composition comprises a polymer obtained by polymerization of a monomer having an ethylenically unsaturated bond and a thermoplastic elastomer, the method being characterized by comprising the steps of:
(A) adding, before or during the polymerization of the monomer having an ethylenically unsaturated bond, a phenolic antioxidant represented by the following Formula (1), which is masked with an organoaluminum compound, to at least one of a catalyst system, a polymerization system and a piping, such that the above-described phenolic antioxidant is incorporated in an amount of 0.001 to 0.5 parts by mass with respect to a total of 100 parts by mass of the polymer obtained by the polymerization of the monomer having an ethylenically unsaturated bond and the thermoplastic elastomer; and
(B) melt-kneading the polymer obtained by the polymerization of the monomer having an ethylenically unsaturated bond with the thermoplastic elastomer: 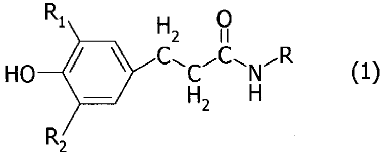 (wherein, R₁ and R₂ each independently represent a hydrogen atom, an alkyl group having 1 to 5 carbon atoms which is optionally branched or an arylalkyl group having 7 to 9 carbon atoms; and R represents an alkyl group having 1 to 30 carbon atoms which is optionally branched, an alkenyl group having 2 to 30 carbon atoms which is optionally branched, a cycloalkyl group having 3 to 12 carbon atoms which is optionally substituted or an aryl group having 6 to 18 carbon atoms which is optionally substituted).

In the above-described step (B) of the method of producing a resin composition for a coated member according to the present invention, the polymer obtained by the polymerization of the monomer having an ethylenically unsaturated bond and the thermoplastic elastomer be melt-kneaded at a mass ratio, the polymer obtained by the polymerization of the monomer having an ethylenically unsaturated bond/the thermoplastic elastomer, of 2/1 to 4/1.

Further, in the method of producing a resin composition for a coated member according to the present invention, it is preferred that the above-described thermoplastic elastomer be obtained by polymerization of a monomer having an ethylenically unsaturated bond, before or during which polymerization of the monomer having an ethylenically unsaturated bond a phenolic antioxidant represented by the above-described Formula (1), which is masked with an organoaluminum compound, is added to at least one of a catalyst system, a polymerization system and a piping.

Still further, it is preferred that the method of producing a resin composition for a coated member according to the present invention further comprise the step of adding, before or during the polymerization of the monomer having an ethylenically unsaturated bond, a phosphorus-based antioxidant to at least one of the catalyst system, the polymerization system and the piping, such that the phosphorus-based antioxidant is incorporated in an amount of 0.001 to 3 parts by mass with respect to a total of 100 parts by mass of the polymer obtained by the polymerization of the monomer having an ethylenically unsaturated bond and the thermoplastic elastomer.

Yet still further, in the method of producing a resin composition for a coated member according to the present invention, it is preferred that the above-described organoaluminum compound be a trialkylaluminum.

The method of producing a coated member according to the present invention is characterized by comprising the step of coating a molded article of a resin composition obtained by the above-described method of producing a resin composition for a coated member. It is preferred that the method of producing a coated member according to the present invention also comprise the step of subjecting the above-described molded article of the resin composition to a plasma treatment before the above-described coating step.

The coated member according to the present invention is characterized by being produced by the above-described method of producing a coated member and it is preferred that the coated member contain a light stabilizer and a filler.

### EFFECTS OF THE INVENTION

By the present invention, a method of producing a resin composition for a coated member, by which a resin composition for a coated member which shows good secondary adhesion with a coating film and good heat-yellowing resistance can be obtained, can be provided.

### MODE FOR CARRYING OUT THE INVENTION

The phenolic antioxidant used in the present invention is a compound represented by the following Formula (1): 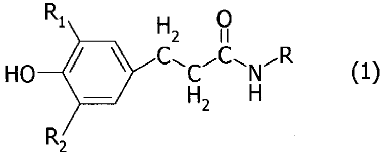 (wherein, R₁ and R₂ each independently represent a hydrogen atom, an alkyl group having 1 to 5 carbon atoms which is optionally branched or an arylalkyl group having 7 to 9 carbon atoms; and R represents an alkyl group having 1 to 30 carbon atoms which is optionally branched, an alkenyl group having 2 to 30 carbon atoms which is optionally branched, a cycloalkyl group having 3 to 12 carbon atoms which is optionally substituted or an aryl group having 6 to 18 carbon atoms which is optionally substituted).

Examples of the alkyl group having 1 to 5 carbon atoms which is optionally branched and represented by R₁ and R₂ in the above-described Formula (1) include methyl group, ethyl group, propyl group, isopropyl group, butyl group, sec-butyl group, tert-butyl group, pentyl group, sec-pentyl group and tert-pentyl group; however, the alkyl group is particularly preferably a tert-butyl group since it has good effect of stabilizing the phenolic antioxidant.

Examples of the arylalkyl group having 7 to 9 carbon atoms which is represented by R₁ and R₂ in the above-described Formula (1) include benzyl and 1-methyl-1-phenylethyl.

Examples of the alkyl group having 1 to 30 carbon atoms which is optionally branched and represented by R in the above-described Formula (1) include methyl group, ethyl group, propyl group, isopropyl group, butyl group, sec-butyl group, t-butyl group, isobutyl group, pentyl group, isopentyl group, t-pentyl group, hexyl group, heptyl group, n-octyl group, isooctyl group, t-octyl group, nonyl group, isononyl group, decyl group, undecyl group, dodecyl group, tridecyl group, tetradecyl group, pentadecyl group, hexadecyl group, heptadecyl group and octadecyl group; however, in the present invention, an alkyl group having 12 to 24 carbon atoms is particularly preferred. When the alkyl group has less than 12 carbon atoms, the phenolic antioxidant may be easily vaporized, while when the alkyl group has more than 24 carbon atoms, the ratio of phenol relative to the molecular weight of the phenolic antioxidant is decreased, so that the stabilizing effect may be reduced.

These alkyl groups are also optionally interrupted by an oxygen atom, a sulfur atom or the below-described aryl group, and the hydrogen atoms of the alkyl groups are also optionally substituted with a hydroxy group, a cyano group, an alkenyl group, a chain aliphatic group such as an alkenyloxy group, pyrrole, furan, thiophene, imidazole, oxazole, thiazole, pyrazole, isoxazole, isothiazole, pyridine, pyridazine, pyrimidine, pyrazine, piperidine, piperazine, morpholine, 2H-pyran, 4H-pyran, phenyl, biphenyl, triphenyl, naphthalene, anthracene, pyrrolidine, pyrindine, indolizine, indole, isoindole, indazole, purine, quinolizine, quinoline, isoquinoline or a cyclic aliphatic group such as a cycloalkyl group. In addition, these interruptions or substitutions may also exist in combination.

The alkenyl group having 2 to 30 carbon atoms which is optionally branched and may be represented by the above-described R is the above-described alkyl group into which a carbon-carbon double bond is introduced. In the same manner as in the case of the above-described alkyl group, an alkenyl group having 12 to 24 carbon atoms is particularly preferred.

Examples of the cycloalkyl group having 3 to 12 carbon atoms which is optionally substituted and represented by R in the above-described Formula (1) include cyclopropyl group, cyclopentyl group, cyclohexyl group, cycloheptyl group, cyclooctyl group, cyclononyl group and cyclodecyl group. The hydrogen atoms of the cycloalkyl group are optionally substituted with an alkyl group, an alkenyl group, an alkenyloxy group, a hydroxy group or a cyano group, and the alkyl group is also optionally interrupted by an oxygen atom or a sulfur atom.

Examples of the aryl group having 6 to 18 carbon atoms which is optionally substituted and represented by R in the above-described Formula (1) include phenyl group, methylphenyl group, butylphenyl group, octylphenyl group, 4-hydroxyphenyl group, 3,4,5-trimethoxyphenyl group, 4-t-butylphenyl group, biphenyl group, naphthyl group, methylnaphthyl group, anthracenyl group, phenanthryl group, benzyl group, phenylethyl group and 1-phenyl-1-methylethyl group. Further, the hydrogen atoms of the aryl group are optionally substituted with an alkyl group, an alkenyl group, an alkenyloxy group, a hydroxy group or a cyano group, and the alkyl group is also optionally interrupted by an oxygen atom or a sulfur atom.

Specific examples of the structure of the phenolic antioxidant represented by the above-described Formula (1) include the following compounds No. 1 to No. 16. However, the present invention is not restricted to the following compounds by any means.

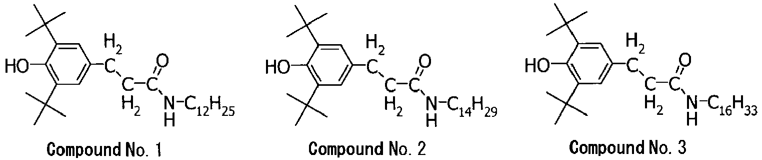

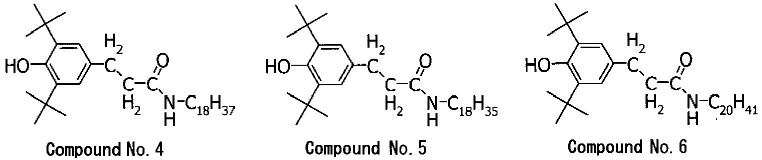

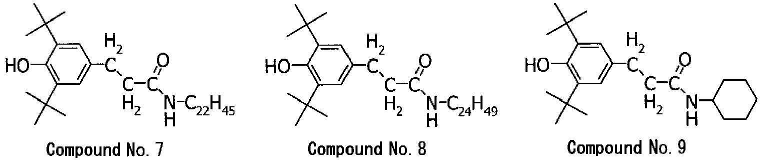

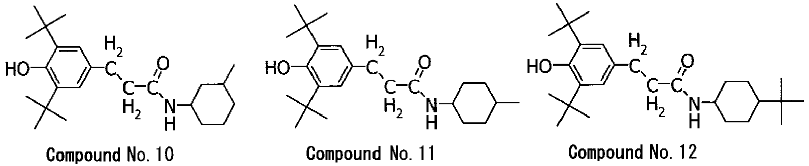

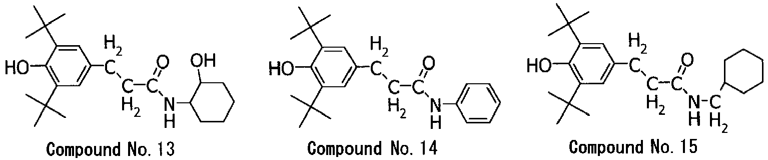

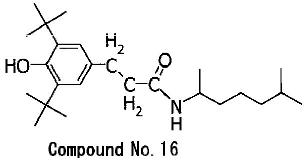

In cases where the phenolic antioxidant represented by the above-described Formula (1) which is masked with an organoaluminum compound is added, the phenolic antioxidant is added in an amount of 0.001 to 0.5 parts by mass, preferably 0.001 to 0.3 parts by mass, with respect to 100 parts by mass of the polymer obtained by the polymerization. When the amount of the phenolic antioxidant is less than 0.001 parts by mass, the effect of the addition may not be attained. Meanwhile, the phenolic antioxidant can be added in an amount of greater than 0.5 parts by mass; however, such an amount is economically disadvantageous because it causes the resulting polymer to be colored and the effect of the addition is limited.

As for a method of adding the phenolic antioxidant represented by the above-described Formula (1) which is masked with an organoaluminum compound, there is no particular restriction. Examples of suitable mode thereof include one in which the masked phenolic antioxidant is added and mixed in at least one of a catalyst feed tank, a polymerization apparatus and a piping of the production line.

The above-described masking can be performed by mixing and stirring an organoaluminum compound and the phenolic antioxidant in an inert solvent. By the mixing and stirring, the hydrogen of the phenolic hydroxyl group of the phenolic antioxidant is substituted with the organoaluminum compound. The above-described phenolic antioxidant and organoaluminum compound may be mixed with stirring prior to being added to at least one of the catalyst system, the polymerization system and the piping. Alternatively, the phenolic antioxidant and the organoaluminum compound may be added and mixed separately in at least one of the catalyst system, the polymerization system and the piping.

In cases where a compound produced as a by-product in the masking reaction of the phenolic antioxidant does not affect the polymerization reaction of the monomer or the resulting polymer, the masked phenolic antioxidant may be used as is; however, in cases where the by-produced compound inhibits the polymerization, it is preferred to remove the compound by vacuum distillation or the like before adding the masked phenolic antioxidant to at least one of the catalyst system, the polymerization system and the piping.

It is desired that the above-described masked phenolic antioxidant be capable of regenerating phenol by undergoing a reaction with a hydrogen-donating compound such as water, an alcohol or an acid, which is added as a deactivation treatment of the polymerization catalyst after the polymerization.

Examples of the above-described organoaluminum compound include alkylaluminums and alkylaluminum hydrides, and the organoaluminum compound is preferably an alkylaluminum, particularly preferably a trialkylaluminum. Examples of the trialkylaluminum include trimethylaluminum, triethylaluminum, tri-n-propylaluminum, triisobutylaluminum, tri-n-hexylaluminum and tri-n-octylaluminum, and these compounds may be used individually or in combination as a mixture. In addition, an aluminoxane obtained by a reaction between an alkylaluminum or an alkylaluminum hydride and water can also be used in the same manner.

It is desired that the mixing ratio of the organoaluminum compound and the phenolic antioxidant represented by the above-described Formula (1) (the organoaluminum compound/the phenolic antioxidant represented by the above-described Formula (1)) be, in terms of mass ratio, 1/5 to 100/1. When the ratio of the organoaluminum compound is lower than 1/5, the excessive amount of the phenolic antioxidant may adversely affect the catalyst activity, while when the ratio is higher than 100/1, an aluminum compound remains in the resulting polymer after the polymerization and this may cause deterioration in the physical properties of the polymer or affect the component ratio of the catalyst metal, making it unable to perform the desired polymerization.

Examples of the above-described inert solvent include aliphatic and aromatic hydrocarbon compounds. Examples of the aliphatic hydrocarbon compounds include saturated hydrocarbon compounds such as n-pentane, n-hexane, n-heptane, n-octane, isooctane and refined kerosene; and cyclic saturated hydrocarbon compounds such as cyclopentane, cyclohexane and cycloheptane. Examples of the aromatic hydrocarbon compounds include benzene, toluene, ethylbenzene, xylene and gasoline fractions. Among these compounds, n-hexane, n-heptane or a gasoline fraction is preferably used. The concentration of the trialkylaluminum salt in the inert solvent is preferably 0.001 to 0.5 mol/L, particularly preferably 0.01 to 0.1 mol/L.

It is preferred that the production method according to the present invention further comprise the step of adding, before or during the polymerization of the monomer having an ethylenically unsaturated bond, a phosphorus-based antioxidant to at least one of the catalyst system, the polymerization system and the piping in an amount of 0.001 to 3 parts by mass with respect to 100 parts by mass of the polymer obtained by the polymerization.

Examples of the phosphorus-based antioxidant used in the present invention include known phosphorus-based antioxidants such as triphenyl phosphite, trisnonylphenyl phosphite, tris(2,4-di-tert-butylphenyl)phosphite, tris(2,4-di-tert-butyl-5-methylphenyl)phosphite, tris[2-tert-butyl-4-(3-tert-butyl-4-hydroxy-5-methylphenylthio)-5-methylphenyl]phosphite, tridecyl phosphite, octyldiphenyl phosphite, di(decyl)monophenyl phosphite, di(tridecyl)pentaerythritol diphosphite, di(nonylphenyl)pentaerythritol diphosphite, bis(2,4-di-tert-butylphenyl)pentaerythritol diphosphite, bis(2,6-di-tert-butyl-4-methylphenyl)pentaerythritol diphosphite, bis(2,4,6-tri-tert-butylphenyl)pentaerythritol diphosphite, bis(2,4-dicumylphenyl)pentaerythritol diphosphite, tetra(tridecyl)isopropylidenediphenol diphosphite, tetra(tridecyl)-4,4'-n-butylidenebis(2-tert-butyl-5-methylphenol)diphosphite, hexa(tridecyl)-1,1,3-tris(2-methyl-4-hydroxy-5-tert-butylphenyl)butane triphosphite, tetrakis(2,4-di-tert-butylphenyl)biphenylene diphosphonite, 9,10-dihydro-9-oxa-10-phosphaphenanthrene-10-oxide, 2,2'-methylenebis(4,6-tert-butylphenyl)-2-ethylhexyl phosphite, 2,2'-methylenebis(4,6-t-tert-butylphenyl)-octadecyl phosphite, 2,2'-ethylidenebis(4,6-di-tert-butylphenyl)fluorophosphite, tris(2-[(2,4,8,10-tetrakis-tert-butyldibenzo[d,f][1,3,2]dioxaphosphepin-6-yl)oxy]ethyl)amine, 2-ethyl-2-butylpropylene glycol and 2,4,6-tri-tert-butylphenol. Thereamong, a phosphorus-based antioxidant which does not adversely affect the polymerization even when it is added before the polymerization of propylene monomer, such as tris(2,4-di-tert-butylphenyl)phosphite, is preferred.

In cases where the above-described phosphorus-based antioxidant is used, the phosphorus-based antioxidant is added in an amount of 0.001 to 3 parts by mass, preferably 0.005 to 0.5 parts by mass, with respect to 100 parts by mass of the polymer obtained by the polymerization of a monomer having an ethylenically unsaturated bond. When the amount is less than 0.001 parts by mass, the effect of the addition may not be attained. Meanwhile, the phosphorus-based antioxidant can be added in an amount of 3 parts by mass or greater; however, such an amount is economically disadvantageous because the effect of the addition is small.

As a method of adding the phosphorus-based antioxidant, the phosphorus-based antioxidant is preferably mixed with the above-described inert solvent before being added, and the phosphorus-based antioxidant may also be mixed in advance with the inert solvent along with the phenolic antioxidant represented by the above-described Formula (1). Alternatively, the phosphorus-based antioxidant may be mixed with the inert solvent and added to the polymerization system, the catalyst system or the piping, separately from the phenolic antioxidant represented by the Formula (1).

The phenolic antioxidant represented by the above-described Formula (1) which is masked with an organoaluminum compound and the above-described phosphorus-based antioxidant are added in a total amount of preferably 0.001 to 3 parts by mass, more preferably 0.001 to 0.5 parts by mass, with respect to 100 parts by mass of the polymer obtained in the polymerization step.

Examples of the above-described monomer having an ethylenically unsaturated bond include ethylene, propylene, 1-butene, 1-hexene, 3-methyl-1-butene, 3-methyl-1-pentene, 4-methyl-1-pentene, vinylcycloalkane, styrene and derivatives of these monomers.

The monomer used in the present invention which has an ethylenically unsaturated bond may either be a single type of monomer or a combination of two or more types of monomers, and it is preferably ethylene or a combination of α-olefin monomers. The monomer may also be, for example, ethylene by itself, a combination of ethylene and propylene, a combination of ethylene, propylene and butene, or a combination of an α-olefin monomer and a non-conjugated diene monomer.

As a method of performing the polymerization reaction of the monomer having an ethylenically unsaturated bond, any conventionally used method can be employed. For example, a method of performing polymerization in a liquid phase in the presence of an inert solvent such as an aliphatic hydrocarbon (e.g., butane, pentane, hexane, heptane or isooctane), an alicyclic hydrocarbon (e.g., cyclopentane, cyclohexane or methylcyclohexane), an aromatic hydrocarbon (e.g., toluene, xylene or ethylbenzene), a gasoline fraction or a hydrogenated diesel fraction; a polymerization method in which a liquefied monomer itself is used as a medium; a method of performing polymerization in a gas phase where substantially no liquid phase is present, such as an inert gas atmosphere of nitrogen or the like; or a combination of two or more of these polymerization methods can also be employed. Further, the polymerization may be performed by either a batchwise process or a continuous process, and it may also be performed by a single-step polymerization method or a multi-step polymerization method.

Moreover, an active hydrogen compound, a particulate carrier, an organoaluminum compound, an ion-exchanging layered compound, an inorganic silicate or a catalyst component other than the above-described polymerization catalyst, such as a carrier, may also be incorporated in such an amount which does not inhibit the polymerization.

As a polymerization vessel to be used in the above-described polymerization reaction, a continuous reaction vessel installed in an existing polymerization equipment can be used as is. In the present invention, there is no particular restriction on the size, shape, material and the like of the existing polymerization equipment.

The above-described polymerization catalyst is not particularly restricted and any known polymerization catalyst can be employed. Examples thereof include compounds of transition metals belonging to one of the groups 3 to 11 of the periodic table (such as titanium, zirconium, hafnium, vanadium, iron, nickel, lead, platinum, yttrium and samarium). Representative examples of the polymerization catalyst include Ziegler catalysts; Ziegler-Natta catalysts composed of a titanium-containing solid transition metal component and an organic metal component; Brookhart catalysts, which are compounds in which a hetero atom of nitrogen, oxygen, sulfur, phosphorus or the like is bound to a transition metal belonging to one of the groups 4 to 10 of the periodic table; and metallocene catalysts composed of a transition metal compound belonging to one of the groups 4 to 6 of the periodic table, which has at least one cyclopentadienyl skeleton, and a co-catalyst component. However, an electron-donating compound is preferably employed since a high-quality polymer can be obtained.

Examples of the above-described Ziegler catalysts include those catalysts that are produced by subjecting a titanium trichloide or titanium trichloride composition, which is obtained by reduction of titanium tetrachloride with organoaluminum or the like, to a treatment with an electron-donating compound and then activating the resultant (see, for example, Japanese Unexamined Patent Application Publication Nos. S47-34478, S58-23806 and S63-146906); catalysts composed of a titanium trichloride composition, which is obtained by reducing titanium tetrachloride with an organoaluminum compound and then treating the resultant with a variety of electron donors and electron acceptors, an organoaluminum compound and an aromatic carboxylic acid ester (see, for example, Japanese Unexamined Patent Application Publication Nos. S56-100806, S56-120712 and S58-104907); and supported-type catalysts composed of titanium tetrachloride and a variety of electron donors that are supported on magnesium halide (see, for example, Japanese Unexamined Patent Application Publication Nos. S57-63310, S58-157808, S58-83006, S58-5310, S61-218606, S63-43915 and S63-83116).

Examples of the above-describe metallocene catalysts include the transition metal metallocene catalyst described in Japanese Unexamined Patent Application Publication No. H9-12621; and those transition metal metallocene catalysts primarily used in polymerization of polypropylene, which are described in Japanese Unexamined Patent Application Publication Nos. H5-043616, H5-295022, H5-301917, H6-239914, H6-239915, H6-239917, H7-082311, H7-228621, H7-330820, H8-059724, H8-085707, H8-085708, H8-127613, H10-226712, H10-259143, H10-265490, H11-246582, H11-279189, H11-349633, 2000-229990, 2001-206914, 2002-37795, 2002-194015 and 2002-194016, Japanese Translated PCT Patent Application Laid-open No. 2002-535339, WO 99/37654, WO 99/45014 and WO 00/8036.

Examples of the above-described electron-donating compounds include ether-based compounds, ester-based compounds, ketone-based compounds and alkoxysilane-based compounds. These electron-donating compounds may be added individually, or a plurality thereof may be added as required.

Examples of the above-described ether-based compounds include diethyl ether, dipropyl ether, diisopropyl ether, di-n-butyl ether, diethylene glycol dimethyl ether, propylene glycol dimethyl ether, ethylene oxide, tetrahydrofuran, 2,2,5,5-tetramethyl tetrahydrofuran and dioxane.

Examples of the above-described ester-based compounds include methyl acetate, ethyl acetate, n-propyl acetate, isopropyl acetate, methyl propionate, ethyl propionate, n-propyl propionate, methyl methacrylate, ethyl methacrylate, n-propyl methacrylate, ethyl phenylacetate, methyl benzoate, ethyl benzoate, phenyl benzoate, methyl toluate, ethyl toluate, methyl anisate, ethyl anisate, methyl methoxybenzoate, ethyl methoxybenzoate, methyl methacrylate, ethyl methacrylate, dimethyl phthalate, diethyl phthalate, dipropyl phthalate, dibutyl phthalate, diisobutyl phthalate, dihexyl phthalate, γ-butyrolactone and ethyl cellosolve.

Examples of the above-described ketone-based compounds include acetone, diethyl ketone, methylethyl ketone and acetophenone.

Examples of the above-described alkoxysilane-based compounds include tetramethoxysilane, ethyltrimethoxysilane, propyltrimethoxysilane, isopropyltrimethoxysilane, t-butyltrimethoxysilane, i-butyltrimethoxysilane, phenyltrimethoxysilane, cyclohexyltrimethoxysilane, diethyldimethoxysilane, dipropyldimethoxysilane, diisopropyldimethoxysilane, diphenyldimethoxysilane, t-butylmethyldimethoxysilane, t-butylethyldimethoxysilane, t-butyl-n-propyldimethoxysilane, t-butylisopropyldimethoxysilane, cyclohexylmethyldimethoxysilane, tetraethoxysilane, ethyltriethoxysilane, propyltriethoxysilane, isopropyltriethoxysilane, t-butyltriethoxysilane, phenyltriethoxysilane, cyclohexyltriethoxysilane, diethyldiethoxysilane, dipropyldiethoxysilane, diisopropyldiethoxysilane, diphenyldiethoxysilane, t-butylmethyldiethoxysilane, cyclohexylmethyldiethoxysilane and dicyclopentyldimethoxysilane.

The type of the above-described carrier is not restricted and examples thereof include inorganic carriers such as inorganic oxides and organic carriers such as porous polyolefins. A plurality of these carriers may also be used in combination.

Examples of the above-described inorganic carriers include silica, alumina, magnesium oxide, zirconium oxide, titanium oxide, iron oxide, calcium oxide and zinc oxide. In addition, examples of other inorganic carriers include magnesium halides such as magnesium chloride and magnesium bromide; magnesium alkoxides such as magnesium ethoxide; and ion-exchanging layered compounds.

The above-described "ion-exchanging layered compounds" refer to those compounds having a crystalline structure in which the surfaces constituted by ionic bonds and the like are laminated in parallel with each other through week bonding force and contain exchangeable ions. Specific examples of such ion-exchanging layered compound include kaolin, bentonite, talc, kaolinite, vermiculite, montmorillonite, mica, α-Zr(HAsO₄)₂·H₂O, α-Zr(HPO₄)₂H₂O, α-Sn(HPO₄)₂·H₂O and γ-Ti(NH₄PO₄)₂·H₂O.

Examples of the above-described organic carriers include polyesters such as polyethylenes, polypropylenes, polystyrenes, ethylene-butene copolymers, ethylenepropylene copolymers, polymethacrylates, polyacrylates, polyacrylonitriles, polyamides, polycarbonates and polyethylene terephthalates; and polyvinyl chlorides. These organic carriers may also be cross-linked as in the case of, for example, a styrene-divinylbenzene copolymer. Further, catalysts chemically bound to these organic carriers can be used as well.

These carriers have a particle size (volume average) in the range of usually 0.1 to 300 µm, preferably 1 to 200 µm, more preferably 10 to 100 µm. When the particle size is smaller than 1 µm, the resulting polymer is likely to be in the form of fine powder, while when the particle size is excessively large, coarse particles are generated. Therefore, the particle size of the carrier should be selected in accordance with the desired particle shape.

The above-described carrier usually has a pore volume of 0.1 to 5 cm²/g, preferably 0.3 to 3 cm²/g. The pore volume can be measured by, for example, a BET method or mercury porosimetry.

Examples of the above-described organoaluminum compound include the same ones as those exemplified for the organoaluminum compound used in the masking of the above-described phenolic antioxidant represented by the Formula (1).

In the above-described polymer, as required, other additive(s) that are normally used in a polymer obtained from a monomer having an ethylenically unsaturated bond may also be blended. As a method of blending such other additives, the additives may be added before or at the time of polymerizing the monomer having an ethylenically unsaturated bond, as long as the additives do not inhibit the polymerization. Alternatively, other additives may be mixed with the above-described polymer in an amount appropriate for the intended purpose and the resulting mixture can then be granulated and molded by melt-kneading using a molding apparatus such as an extruder.

Examples of such other additives include phenolic antioxidants, phosphorus-based antioxidants, thioester-based antioxidants, ultraviolet absorbers, hindered amine compounds, heavy metal inactivators, nucleating agents, flame retardants, metallic soaps, hydrotalcites, fillers, lubricants, antistatic agents, pigments, dyes and plasticizers.

The above-described phenolic antioxidant is different from the one represented by the above-described Formula (1). Examples of such phenolic antioxidant include 2,6-di-t-butyl-4-ethylphenol, 2-t-butyl-4,6-dimethylphenol, styrenated phenol, 2,2'-methylenebis(4-ethyl-6-t-butylphenol), 2,2'-thiobis-(6-t-butyl-4-methylphenol), 2,2'-thiodiethylenebis[3-(3,5-di-t-butyl-4-hydroxyphenyl)propionate], 2-methyl-4,6-bis(octylsulfanylmethyl)phenol, 2,2'-isobutylidenebis(4,6-dimethylphenol), iso-octyl-3-(3,5-di-t-butyl-4-hydroxyphenyl)propionate, N,N'-hexane-1,6-diylbis[3-(3,5-di-t-butyl-4-hydroxyphenyl)propionamide, 2,2'-oxamide-bis[ethyl-3-(3,5-di-t-butyl-4-hydroxyphenyl)propionate], 2-ethylhexyl-3-(3',5'-di-t-butyl-4'-hydroxyphenyl)propionate, 2,2'-ethylenebis(4,6-di-t-butylphenol), 3,5-bis(1,1-dimethylethyl)-4-hydroxy-benzenepropanoate, C13-15 alkyl esters, 2,5-di-t-amylhydroquinone, hindered phenol polymer (AO.OH998, manufactured by ADEKA Palmarole), 2,2'-methylenebis[6-(1-methylcyclohexyl)-p-cresol], 2-t-butyl-6-(3-t-butyl-2-hydroxy-5-methylbenzyl)-4-methylphenyl acrylate, 2-[1-(2-hydroxy-3,5-di-t-pentylphenyl)ethyl]-4,6-di-t-pentylphenyl acrylate, 6-[3-(3-t-butyl-4-hydroxy-5-methyl)propoxy]-2,4,8,10-tetra-t-butylbenzo[d,f][1,3,2]-dioxaphosphepin, hexamethylenebis[3-(3,5-di-t-butyl-4-hydroxyphenyl)propionate, calcium bis[monoethyl(3,5-di-t-butyl-4-hydroxybenzyl)phosphonate, a reaction product between 5,7-bis(1,1-dimethylethyl)-3-hydroxy-2(3H)-benzofuranone and o-xylene, 2,6-di-t-butyl-4-(4,6-bis(octylthio)-1,3,5-triazine-2-ylamino)phenol, DL-a-tocophenol (vitamin E), 2,6-bis(α-methylbenzyl)-4-methylphenol, bis[3,3-bis-(4'-hydroxy-3'-t-butyl-phenyl)butyric acid]glycol ester, 2,6-di-t-butyl-p-cresol, 2,6-diphenyl-4-octadecyloxyphenol, stearyl(3,5-di-t-butyl-4-hydroxyphenyl)propionate, distearyl(3,5-di-t-butyl-4-hydroxybenzyl)phosphonate, tridecyl-3,5-di-t-butyl-4-hydroxybenzyl thioacetate, thiodiethylenebis[(3,5-di-t-butyl-4-hydroxyphenyl)propionate], 4,4'-thiobis(6-t-butyl-m-cresol), 2-octylthio-4,6-di(3,5-di-t-butyl-4-hydroxyphenoxy)-s-triazine, 2,2'-methylenebis(4-methyl-6-t-butylphenol), bis[3,3-bis(4-hydroxy-3-t-butylphenyl)butyric acid]glycol ester, 4,4'-butylidenebis(2,6-di-t-butylphenol), 4,4'-butylidenebis(6-t-butyl-3-methylphenol), 2,2'-ethylidenebis(4,6-di-t-butylphenol), 1,1,3-tris(2-methyl-4-hydroxy-5-t-butylphenyl)butane, bis[2-t-butyl-4-methyl-6-(2-hydroxy-3-t-butyl-5-methylbenzyl)phenyl]terephthalate, 1,3,5-tris(2,6-dimethyl-3-hydroxy-4-t-butylbenzyl)isocyanurate, 1,3,5-tris(3,5-di-t-butyl-4-hydroxybenzyl)isocyanurate, 1,3,5-tris(3,5-di-t-butyl-4-hydroxybenzyl)-2,4,6-trimethylbenzene, 1,3,5-tris[(3,5-di-t-butyl-4-hydroxyphenyl)propionyloxyethyl]isocyanurate, tetrakis[methylene-3-(3',5'-di-t-butyl-4'-hydroxyphenyl)propionate]methane, 2-t-butyl-4-methyl-6-(2-acryloyloxy-3-t-butyl-5-methylbenzyl)phenol, 3,9-bis[2-(3-t-butyl-4-hydroxy-5-methylhydrocinnamoyloxy)-1,1-dimethylethyl]-2,4,8,10-tetraoxaspiro[5.5]undecane and triethylene glycol-bis[β-(3-t-butyl-4-hydroxy-5-methylphenyl)propionate]. In particular, for example, tetrakis[methylene-3-(3',5'-di-t-butyl-4'-hydroxyphenyl)propionate]methane is preferably used.

The phenolic antioxidant used as the above-described other additive is added in an amount of 0.001 to 5 parts by mass, more preferably 0.001 to 0.5 parts by mass, with respect to 100 parts by mass of the above-described polymer.

Examples of the phosphorus-based antioxidant used as the above-described other additive include the same ones as those compounds exemplified in the above as the phosphorus-based antioxidant to be added. The above-described phosphorus-based antioxidant is used in an amount of preferably 0.001 to 0.5 parts by mass with respect to 100 parts by mass of the above-described polymer.

Examples of the above-described thioester-based antioxidant include tetrakis[methylene-3-(laurylthio)propionate]methane, bis(methyl-4-[3-n-alkyl(C12/C14)thiopropionyloxy]5-t-butylphenyl)sulfide, ditridecyl-3,3'-thiodipropionate, dilauryl-3,3'-thiodipropionate, dimyristyl-3,3'-thiodipropionate, distearyl-3,3'-thiodipropionate, lauryl/stearyl thiodipropionate, 4,4'-thiobis(6-t-butyl-m-cresol), 2,2'-thiobis(6-t-butyl-p-cresol) and distearyl-disulfide.

The thioester-based antioxidant is used in an amount of preferably 0.001 to 0.3 parts by mass, more preferably 0.01 to 0.3 parts by mass, with respect to 100 parts by mass of the above-described polymer.

Examples of the above-described ultraviolet absorber include 2-hydroxybenzophenones such as 2,4-dihydroxybenzophenone, 2-hydroxy-4-methoxybenzophenone, 2-hydroxy-4-octoxybenzophenone and 5,5'-methylenebis(2-hydroxy-4-methoxybenzophenone); 2-(2-hydroxyphenyl)benzotriazoles such as 2-(2-hydroxy-5-methylphenyl)benzotriazole, 2-(2-hydroxy-5-tert-octylphenyl)benzotriazole, 2-(2-hydroxy-3,5-di-tert-butylphenyl)-5-chlorobenzotriazole, 2-(2-hydroxy-3-tert-butyl-5-methylphenyl)-5-chlorobenzotriazole, 2-(2-hydroxy-3,5-dicumylphenyl)benzotriazole, 2,2'-methylenebis(4-tert-octyl-6-benzotriazolylphenol), polyethylene glycol ester of 2-(2-hydroxy-3-tert-butyl-5-carboxyphenyl)benzotriazole, 2-[2-hydroxy-3-(2-acryloyloxyethyl)-5-methylphenyl]benzotriazole, 2-[2-hydroxy-3-(2-methacryloyloxyethyl)-5-tert-butylphenyl]benzotriazole, 2-[2-hydroxy-3-(2-acryloyloxyethyl)-5-tert-octhylphenyl]benzotriazole, 2-[2-hydroxy-3-(2-methacryloyloxyethyl)-5-tert-butylphenyl]-5-chlorobenzotriazole, 2-[2-hydroxy-5-(2-methacryloyloxyethyl)phenyl]benzotriazole, 2-[2-hydroxy-3-tert-butyl-5-(2-methacryloyloxyethyl)phenyl]benzotriazole, 2-[2-hydroxy-3-tert-amyl-5-(2-methacryloyloxyethyl)phenyl]benzotriazole, 2-[2-hydroxy-3-tert-butyl-5-(3-methacryloyloxypropyl)phenyl]-5-chlorobenzotriazole, 2-[2-hydroxy-4-(2-methacryloyloxymethyl)phenyl]benzotriazole, 2-[2-hydroxy-4-(3-methacryloyloxy-2-hydroxypropyl)phenyl]benzotriazole and 2-[2-hydroxy-4-(3-methacryloyloxypropyl)phenyl]benzotriazole; 2-(2-hydroxyphenyl)-4,6-diaryl-1,3,5-triazines such as 2-(2-hydroxy-4-methoxyphenyl)-4,6-diphenyl-1,3,5-triazine, 2-(2-hydroxy-4-hexyloxyphenyl)-4,6-diphenyl-1,3,5-triazine, 2-(2-hydroxy-4-octoxyphenyl)-4,6-bis(2,4-dimethylphenyl)-1,3,5-triazine, 2-[2-hydroxy-4-(3-C12 to C13 mixed alkoxy-2-hydroxypropoxy)phenyl]-4,6-bis(2,4-dimethylphenyl)-1,3,5-triazine, 2-[2-hydroxy-4-(2-acryloyloxyethoxy)phenyl]-4,6-bis(4-methylphenyl)-1,3,5-triazine, 2-(2,4-dihydroxy-3-allylphenyl)-4,6-bis(2,4-dimethylphenyl)-1,3,5-triazine and 2,4,6-tris(2-hydroxy-3-methyl-4-hexyloxyphenyl)-1,3,5-triazine; benzoates such as phenylsalicylate, resorcinol monobenzoate, 2,4-di-tert-butylphenyl-3,5-di-tert-butyl-4-hydroxybenzoate, octyl(3,5-di-tert-butyl-4-hydroxy)benzoate, dodecyl(3,5-di-tert-butyl-4-hydroxy)benzoate, tetradecyl(3,5-di-tert-butyl-4-hydroxy)benzoate, hexadecyl(3,5-di-tert-butyl-4-hydroxy)benzoate, octadecyl(3,5-di-tert-butyl-4-hydroxy)benzoate and behenyl(3,5-di-tert-butyl-4-hydroxy)benzoate; substituted oxanilides such as 2-ethyl-2'-ethoxyoxanilide and 2-ethoxy-4'-dodecyloxanilide; cyanoacrylates such as ethyl-α-cyano-β,β-diphenylacrylate and methyl-2-cyano-3-methyl-3-(p-methoxyphenyl)acrylate; and a variety of metal salts and metal chelates, in particular, salts and chelates of nickel and chromium.

The above-described ultraviolet absorber is used in an amount of 0.001 to 5 parts by mass, more preferably 0.005 to 0.5 parts by mass, with respect to 100 parts by mass of the above-described polymer.

Examples of the above-described hindered amine-based light stabilizer include 2,2,6,6-tetramethyl-4-piperidyl stearate, 1,2,2,6,6-pentamethyl-4-piperidyl stearate, 2,2,6,6-tetramethyl-4-piperidyl benzoate, bis(2,2,6,6-tetramethyl-4-piperidyl)sebacate, tetrakis(2,2,6,6-tetramethyl-4-piperidyl)-1,2,3,4-butane tetracarboxylate, tetrakis(1,2,2,6,6-pentamethyl-4-piperidyl)-1,2,3,4-butane tetracarboxylate, bis(2,2,6,6-tetramethyl-4-piperidyl)·di(tridecyl)-1,2,3,4-butane tetracarboxylate, bis(1,2,2,6,6-pentamethyl-4-piperidyl)·di(tridecyl)-1,2,3,4-butane tetracarboxylate, bis(1,2,2,4,4-pentamethyl-4-piperidyl)-2-butyl-2-(3,5-di-tert-butyl-4-hydroxybenzyl)malonate, 1-(2-hydroxyethyl)-2,2,6,6-tetramethyl-4-piperidinol/diethyl succinate polycondensate, 1,6-bis(2,2,6,6-tetramethyl-4-piperidylamino)hexane/2,4-dichloro-6-morpholino-s-triazine polycondensate, 1,6-bis(2,2,6,6-tetramethyl-4-piperidylamino)hexane/2,4-dichloro-6-tert-octylamino-s-triazine polycondensate, 1,5,8,12-tetrakis[2,4-bis(N-butyl-N-(2,2,6,6-tetramethyl-4-piperidyl)amino)-s-triazine-6-yl]-1,5,8,12-tetraazadodecane, 1,5,8,12-tetrakis[2,4-bis(N-butyl-N-(1,2,2,6,6-pentamethyl-4-piperidyl)amino)-s-triazine-6-yl]-1,5,8,12-tetraazadodecane, 1,6,11 -tris[2,4-bis(N-butyl-N-(2,2,6,6-tetramethyl-4-piperidyl)amino)-s-triazine-6-yl]aminoundecane, 1,6,11-tris[2,4-bis(N-butyl-N-(1,2,2,6,6-pentamethyl-4-piperidyl)amino)-s-triazine-6-yl]aminoundecane, bis{4-(1-octyloxy-2,2,6,6-tetramethyl)piperidyl}decanedionate, bis {4-(2,2,6,6-tetramethyl-1-undecyloxy)piperidyl}carbonate and TINUVIN NOR 371 manufactured by Ciba Specialty Chemicals K.K.

The above-described hindered amine-based light stabilizer is used in an amount of preferably 0.001 to 5 parts by mass, more preferably 0.005 to 0.5 parts by mass, with respect to 100 parts by mass of the above-described polymer.

Examples of the above-described heavy metal inactivator include salicylamide-1,2,4-triazol-3-yl, bis-salicylic acid hydrazide, dodecanedioyl-bis(2-(2-hydroxybenzoyl)hydrazide) and bis(3-(3,5-di-t-butyl-4-hydroxyphenyl)propionic acid)hydrazide. The heavy metal inactivator is used in an amount of preferably 0.001 to 10 parts by mass, more preferably 0.05 to 5 parts by mass, with respect to 100 parts by mass of the above-described polymer.

Examples of the above-described nucleating agent include metal carboxylates such as sodium benzoate, aluminum 4-tert-butylbenzoate, sodium adipate and 2-sodium bicyclo[2.2.1]heptane-2,3-dicarboxylate; metal phosphates such as sodium-bis(4-tert-butylphenyl)phosphate, sodium-2,2'-methylenebis(4,6-di-tert-butylphenyl)phosphate and lithium-2,2'-methylenebis(4,6-di-tert-butylphenyl)phosphate; polyhydric alcohol derivatives such as dibenzylidene sorbitol, bis(methylbenzylidene)sorbitol, bis(p-ethylbenzylidene)sorbitol and bis(dimethylbenzylidene)sorbitol; and amide compounds such as N,N',N"-tris[2-methylcyclohexyl]-1,2,3-propane tricarboxamide (RIKACLEAR PC1), N,N',N"-tricyclohexyl-1,3,5-benzene tricarboxamide, N,N'-dicyclohexyl-naphthalene dicarboxamide and 1,3,5-tri(dimethylisopropoylamino)benzene.

The above-described nucleating agent is used in an amount of 0.001 to 10 parts by mass, more preferably 0.005 to 5 parts by mass, with respect to 100 parts by mass of the above-described polymer.

Examples of the above-described flame retardant include aromatic phosphates such as triphenyl phosphate, tricresyl phosphate, trixylenyl phosphate, cresyldiphenyl phosphate, cresyl-2,6-xylenyl phosphate and resorcinol-bis(diphenylphosphate); phosphonates such as divinyl phenyl phosphonate, diallyl phenyl phosphonate and (1-butenyl)phenylphosphonate; phosphinates such as phenyl diphenylphosphinate, methyl diphenylphosphinate and 9,10-dihydro-9-oxa-10-phosphaphenanthlene-10-oxide derivatives; phosphazene compounds such as bis(2-allylphenoxy)phosphazene and dicresylphosphazene; phosphorus-based flame retardants such as melamine phosphate, melamine pyrophosphate, melamine polyphosphate, melamine polyphosphate, ammonium polyphosphate, phosphorus-containing vinylbenzyl compounds and red phosphorus; metal hydroxides such as magnesium hydroxide and aluminum hydroxide; and bromine-based flame retardants such as brominated bisphenol A-type epoxy resin, brominated phenol novolac-type epoxy resin, hexabromobenzene, pentabromotoluene, ethylenebis(pentabromophenyl), ethylenebis-tetrabromophthalimide, 1,2-dibromo-4-(1,2-dibromoethyl)cyclohexane, tetrabromocyclooctane, hexabromocyclododecane, bis(tribromophenoxy)ethane, brominated polyphenylene ether, brominated polystyrene, 2,4,6-tris(tribromophenoxy)-1,3,5-triazine, tribromophenyl maleimide, tribromophenyl acrylate, tribromophenyl methacrylate, tetrabromo bisphenol A-type dimethacrylate, pentabromobenzyl acrylate and brominated styrene.

The above-described flame retardant is used in an amount of preferably 1 to 70 parts by mass, more preferably 10 to 30 parts by mass, with respect to 100 parts by mass of the above-described polymer.

Examples of the above-described filler include talc, mica, calcium carbonate, calcium oxide, calcium hydroxide, magnesium carbonate, magnesium hydroxide, magnesium oxide, magnesium sulfate, aluminum hydroxide, barium sulfate, glass powder, glass fibers, clays, dolomite, mica, silica, alumina, potassium titanate whiskers, wollastonite and fibrous magnesium oxysulfate. Thereamong, a filler having an average particle size (in the case of a spherical or flat filler) or an average fiber diameter (in the case of a needle-form or fibrous filler) of 5 µm or less is preferred. The amount of the above-described filler to be used can be set as appropriate in a range where the present invention is not adversely affected.

The above-described lubricant is added for the purpose of imparting the surface of the resulting molded article with lubricity and improving its damage-preventing effect. Examples of such lubricant include unsaturated fatty acid amides such as oleic acid amide and erucic acid amide; and saturated fatty acid amides such as behenic acid amide and stearic acid amide. These lubricants may be used individually, or two or more thereof may be used in combination.

The above-described lubricant is added in an amount of 0.03 to 2 parts by mass, more preferably 0.04 to 1 part by mass, with respect to 100 parts by mass of the above-described polymer. When the amount is less than 0.03 parts by mass, the desired lubricity may not be attained, while when the amount is greater than 2 parts by mass, the lubricant component may bleed out to the surface of the resulting molded article of the polymer and/or cause deterioration in the physical properties thereof.

The above-described antistatic agent is added for the purpose of reducing the electrostatic property of the resulting molded article and preventing adhesion of dusts caused by electrostatic charge. Examples of the antistatic agent include cationic, anionic and non-ionic antistatic agents. Preferred examples include polyoxyethylene alkylamines, polyoxyethylene alkyl amides, fatty acid esters thereof and glycerin fatty acid esters. These antistatic agents may be used individually, or two or more thereof may be used in combination. Further, the antistatic agent is added in an amount of preferably 0.03 to 2 parts by mass, more preferably 0.04 to 1 part by mass, with respect to 100 parts by mass of the above-described polymer. When the amount of the antistatic agent is excessively small, the antistatic effect becomes insufficient, while when the amount is excessively large, the antistatic agent may bleed out to the surface and/or cause deterioration in the physical properties of the polymer.

As described in the above, the method of producing a resin composition for a coated member according to the present invention is characterized by comprising the steps (A) and (B). In other steps such as the step of preparing a catalyst, the step of feeding a monomer which is a starting material, the step of polymerizing the monomer and the step of recovering the resulting polymer, those method that are known in the method of polymerization a monomer having an ethylenically unsaturated bond can be employed. Hereinafter, these steps will each be described in detail. It is noted here that the term "coated member" used in the present invention refers to a member obtained by coating a molded article of a resin composition.

The step (A) is a step of adding, before or during polymerization of a monomer having an ethylenically unsaturated bond, a phenolic antioxidant represented by the above-described Formula (1), which is masked with an organoaluminum compound, to at least one of a catalyst system, a polymerization system and a piping, such that the above-described phenolic antioxidant is incorporated in an amount of 0.001 to 0.5 parts by mass with respect to a total of 100 parts by mass of the polymer obtained by the polymerization of the monomer having an ethylenically unsaturated bond and a thermoplastic elastomer.

Specific examples of the structure of the phenolic antioxidant represented by the Formula (1) include the above-described compounds No. 1 to No. 16. However, the present invention is not restricted to the above-described compounds by any means.

The phenolic antioxidant represented by above-described Formula (1), which is masked with an organoaluminum compound, is added such that the amount of the phenolic antioxidant (that is, the amount of the phenolic antioxidant by itself prior to being masked) becomes preferably 0.001 to 0.5 parts by mass, more preferably 0.001 to 0.3 parts by mass, with respect to a total of 100 parts by mass of the polymer obtained by the polymerization of the monomer having an ethylenically unsaturated bond and a thermoplastic elastomer.

When the amount of the phenolic antioxidant is less than 0.001 parts by mass, a desired stabilization effect may not be attained, while when the amount is greater than 0.5 parts by mass, the phenolic antioxidant may bleed out to the surface of the resulting molded article to cause the outer appearance.

It is noted here that, in cases where the phenolic antioxidant represented by above-described Formula (1), which is masked with an organoaluminum compound, is added before or during polymerization of a monomer performed to obtain a thermoplastic elastomer, the phenolic antioxidant is added such that the total amount of the phenolic antioxidant added in the step (A) and in the synthesis of the thermoplastic elastomer is in the above-described range.

As for a method of adding the phenolic antioxidant represented by the above-described Formula (1) which is masked with an organoaluminum compound, there is no particular restriction. Examples of suitable mode thereof include one in which the masked phenolic antioxidant is added and mixed in at least one of a catalyst feed tank, a polymerization apparatus and a production line.

The above-described masking can be performed by mixing and stirring an organoaluminum compound and the phenolic antioxidant in an inert solvent. By the mixing and stirring, the hydrogen of the phenolic hydroxyl group of the phenolic antioxidant is substituted with the organoaluminum compound. The above-described phenolic antioxidant and organoaluminum compound may be mixed with stirring prior to being added to at least one of the catalyst system, the polymerization system and the piping. Alternatively, the phenolic antioxidant and the organoaluminum compound may be added and mixed separately in at least one of the catalyst system, the polymerization system and the piping.

In cases where a compound produced as a by-product in the masking reaction of the phenolic antioxidant does not affect the polymerization reaction of the monomer or the resulting polymer, the masked phenolic antioxidant may be used as is; however, in cases where the by-produced compound has an effect, it is preferred to remove the compound by vacuum distillation or the like before adding the masked phenolic antioxidant to at least one of the catalyst system, the polymerization system and the piping.

It is desired that the above-described masked phenolic antioxidant be capable of undergoing a reaction with a hydrogen-donating compound such as water, an alcohol or an acid, which is added as a deactivation treatment of the polymerization catalyst after the polymerization, and be thereby regenerated.

Examples of the above-described organoaluminum compound include the same ones as those exemplified in the above. The mixing ratio of the organoaluminum compound and the phenolic antioxidant represented by the above-described Formula (1) (the organoaluminum compound/the phenolic antioxidant represented by the above-described Formula (1)) is, in terms of mass ratio, 1/5 to 100/1. When the ratio of the organoaluminum compound is lower than 1/5, the excessive amount of the phenolic antioxidant may adversely affect the catalyst activity, while when the ratio is higher than 100/1, an aluminum compound remains in the resulting polymer after the polymerization and this may cause deterioration in the physical properties of the polymer or affect the component ratio of the catalyst metal, making it unable to perform the desired polymerization.

Examples of the above-described inert solvent include the same ones as those exemplified in the above. The concentration of the organoaluminum compound in the inert solvent is in the range of preferably 0.001 to 0.5 mol/L, particularly preferably 0.01 to 0.1 mol/L.

It is preferred that the method of producing a resin composition for a coated member according to the present invention further comprise the step of adding, before or during the polymerization of the monomer having an ethylenically unsaturated bond, a phosphorus-based antioxidant to at least one of the catalyst system, the polymerization system and the piping. The phenolic antioxidant represented by the above-described Formula (1) and the phosphorus-based antioxidant may be added separately, or they may be mixed in advance before being added.

The phosphorus-based antioxidant may also be added at the time of the polymerization of the below-described thermoplastic elastomer (before or during the polymerization of a monomer).

Examples of the above-described phosphorus-based antioxidant include the same ones as those exemplified in the above.

The above-described phosphorus-based antioxidant is used in an amount of preferably 0.001 to 3 parts by mass, more preferably 0.005 to 0.5 parts by mass, with respect to a total of 100 parts by mass of the polymer obtained by the polymerization of the monomer having an ethylenically unsaturated bond and the thermoplastic elastomer.

In cases where the above-described phosphorus-based antioxidant is added in the addition step, the phosphorus-based antioxidant is preferably mixed with the above-described inert solvent; however, the phosphorus-based antioxidant may also be mixed in advance with the inert solvent along with the phenolic antioxidant represented by the above-described Formula (1). Alternatively, the phosphorus-based antioxidant may be mixed with the inert solvent and added to the polymerization system, the catalyst system or the piping, separately from the phenolic antioxidant represented by the Formula (1).

Examples of the above-described monomer having an ethylenically unsaturated bond include the same ones as those exemplified in the above.

In the method of producing a resin composition for a coated member according to the present invention, the monomer to be used which has an ethylenically unsaturated bond may either be a single type of monomer or a combination of two or more types of monomers, and it is preferably ethylene or a combination of α-olefin monomers. The monomer may also be, for example, ethylene by itself, a combination of ethylene and propylene, a combination of ethylene, propylene and butene, or a combination of an α-olefin monomer and a non-conjugated diene monomer.

Examples of a method of performing the polymerization reaction of the monomer having an ethylenically unsaturated bond include the same ones as those exemplified in the above.

As a polymerization vessel to be used in the above-described polymerization reaction, a continuous reaction vessel installed in an existing polymerization equipment can be used as is. In the present invention, there is no particular restriction on the size, shape, material and the like of the existing polymerization equipment.

Examples of a polymerization catalyst used in the above-described polymerization reaction include the same ones as those exemplified in the above.

Further, the polymerization reaction may also be performed in the presence of an active hydrogen compound, an organoaluminum compound, an ion-exchanging layered compound, an inorganic silicate or a catalyst component other than the above-described polymerization catalyst, such as a carrier, in such an amount which does not inhibit the polymerization.

Examples of the above-described carrier include the same ones as those exemplified in the above.

Examples of the above-described ion-exchanging layered compound include the same ones as those exemplified in the above.

Examples of the above-described organic carrier include the same ones as those exemplified in the above.

The carrier has a particle size (volume average) in the range of usually 0.1 to 300 µm, preferably 1 to 200 µm, more preferably 10 to 100 µm. When the particle size is smaller than 1 µm, the resulting polymer is likely to be in the form of fine powder, while when the particle size is excessively large, coarse particles are generated. Therefore, the particle size of the carrier is preferably selected in accordance with the desired particle shape.

The above-described carrier usually has a pore volume of 0.1 to 5 cm²/g, preferably 0.3 to 3 cm²/g. The pore volume can be measured by, for example, a BET method or mercury porosimetry.

Examples of the above-described organoaluminum compound include the same ones as those exemplified for the organoaluminum compound used to mask the phenolic antioxidant represented by the Formula (1).

In the present invention, as required, other additive(s) that are normally used in a polymer obtained from a monomer having an ethylenically unsaturated bond may also be blended. As a method of blending such other additives, the additives may be added at the time of polymerizing the monomer having an ethylenically unsaturated bond, as long as the additives do not inhibit the polymerization. Alternatively, other additives may be mixed with the above-described polymer in an amount appropriate for the intended purpose and the resulting mixture can then be granulated and molded by melt-kneading using a molding apparatus such as an extruder.

The step (B) is a step of melt-kneading the polymer obtained by the polymerization of the monomer having an ethylenically unsaturated bond with the thermoplastic elastomer. In the step (B), the polymer obtained by the polymerization of the monomer having an ethylenically unsaturated bond and the thermoplastic elastomer be melt-kneaded at a mass ratio (the polymer obtained by the polymerization of the monomer having an ethylenically unsaturated bond/the thermoplastic elastomer) of 2/1 to 4/1. When the ratio of the thermoplastic elastomer is lower than 4/1, the adhesion with a coating film may be deteriorated, while when the ratio is higher than 2/1, coloration of the resultant may easily occur.

The above-described "thermoplastic elastomer" refers to a macromolecular material which can be plasticized (fluidized) at a high temperature and processed like a plastic and exhibits properties of a rubber elastic body (elastomer) at normal temperature. A thermoplastic elastomer is composed of a hard segment (plastic component) and a soft segment (elastic component) and has, for example, a block polymer-type structure in which a hard segment and a soft segment are chemically bound in a single polymer to form a block copolymer or a blend-type structure called "sea-island dispersion" or "polymer alloy", which is obtained by physically mixing a polymer constituting a hard segment and a polymer constituting a soft segment.

A block polymer-type thermoplastic elastomer can be produced by block copolymerization. In the case of a blend-type thermoplastic elastomer composition, after producing a soft segment and a hard segment, the thus obtained hard segment and soft segment are physically dispersed using a kneader such as a Banbury mixer or a biaxial extruder, thereby a blend-type thermoplastic elastomer composition can be obtained.

### (Block Polymer-type Thermoplastic Elastomer)

In the present invention, when a block polymer-type thermoplastic elastomer is used, the block copolymer is preferably a copolymer of ethylene and an α-olefin. Examples of the α-olefin include α-olefins having 3 to 10 carbon atoms such as propylene, 1-butene, 1-pentene, 3-methyl-1-butene, 1-hexene, 1-decene, 3-methyl-1-pentene, 4-methyl-1-pentene and 1-octene. These α-olefins may be used individually, or two or more thereof may be used in combination.

Further, in cases where a block polymer-type thermoplastic elastomer is produced, a segment originated from a monomer other than ethylene and α-olefin may also be incorporated. Examples of such other monomer include non-conjugated dienes having 5 to 15 carbon atoms, such as dicyclopentadiene, 5-ethylidene-2-norbornene, 1,4-hexadiene and 1,5-dicyclooctadiene; vinyl ester compounds such as vinyl acetate; ethylenically unsaturated carboxylic acid ester compounds such as methyl methacrylate, ethyl methacrylate, methyl acrylate, ethyl acrylate and butyl acrylate; and vinylnitrile compounds such as acrylonitrile and methacrylonitrile. These other monomers may be used individually, or two or more thereof may be used in combination. Alternatively, these other monomers may be (co-)polymerized as well.

### (Blend-type Thermoplastic Elastomer)

Examples of blend-type thermoplastic elastomer suitably used in the present invention include those which contain an olefin resin as a hard segment and an olefin-based copolymer elastomer as a soft segment.

Examples of the above-described olefin resin contained as a hard segment include low-density polyethylenes, high-density polyethylenes, linear high-density polyethylenes, linear low-density polyethylenes, branched low-density polyethylenes, ethylene homopolymers, propylene homopolymers, and copolymers of ethylene and an α-olefin. Examples of the α-olefin include α-olefins having 3 to 10 carbon atoms such as propylene, 1-butene, 1-pentene, 1-hexene, 4-methyl-1-pentene, 1-heptene, 1-octene and 1-decene. The above-described olefin resins may be used individually, or two or more thereof may be used in combination.

As the above-described olefin-based copolymer elastomer contained as a soft segment, an elastomer which is a copolymer of ethylene and an α-olefin is preferably used. As the above-described α-olefin, for example, an α-olefin having 3 to 10 carbon atoms, such as propylene, 1-butene, 1-pentene, 3-methyl-1-butene, 1-hexene, 1-decene, 3-methyl-1-pentene, 4-methyl-1-pentene or 1-octene, is usually used. The above-described may be used individually, or two or more thereof may be used in combination.

Further, in the case of a blend-type thermoplastic elastomer, the soft segment may also contain other elastomer along with the olefin-based copolymer elastomer, as long as it does not deteriorate the effects of the present invention. As such other elastomer, for example, a styrene-based elastomer such as polybutadiene, hydrogenated polybutadiene or hydrogenated polyisoprene; a polyvinyl chloride-based elastomer; a polyester-based elastomer such as polyether; a polyurethane-based elastomer; a nylon-based elastomer; or an elastic polymer such as natural rubber can be used.

In the above-described blend-type thermoplastic elastomer, the mass ratio of the hard segment and the soft segment can be set as appropriate in accordance with the desired purpose.

The catalyst used in the production of the thermoplastic elastomer according to the present invention is not particularly restricted and any known polymerization catalyst can be employed. Alternatively, the polymerization catalyst exemplified in the above to be used in the polymerization of a monomer having an unsaturated bond may also be employed.

As a method of performing the polymerization reaction, the method exemplified in the above to be used for performing the polymerization reaction of a monomer having an ethylenically unsaturated bond can be employed.

In the thermoplastic elastomer according to the present invention, in addition to the olefin resin and olefin-based copolymer, other component(s) such as other resin, a rubber, a cross-linking agent, a cross-linking auxiliary, a compatibilizing agent, a lubricant, an antistatic agent, a softening agent and/or a foaming agent may be blended as well. It is preferred that the above-described other component(s) be blended prior to the step of melting the thermoplastic elastomer and the above-described polymer obtained by the monomer having an ethylenically unsaturated bond; however, the above-described other component(s) may also be blended simultaneously with the melting step.

Examples of the above-described other resin include ethylene-vinyl acetate copolymer (EVA), ethylene-ethyl acrylate copolymer, polyamide, poly(4-methyl-1-pentene), styrene-isoprene-styrene block copolymer, styrene-ethylenebutene-styrene block copolymer, styrene-ethylenepropylene-styrene block copolymer and styrene-butadiene-styrene block copolymer.

The above-described rubber is not particularly restricted, and it may be, for example, an amorphous random elastic copolymer which contains an olefin-derived repeating unit in an amount of not less than 50% of the high-molecular-weight component in the rubber.

Examples of such elastic copolymer include copolymers that are obtained by copolymerizing a combination of two or more monomers selected from the group consisting of ethylene and α-olefins having 3 to 10 carbon atoms. Further, the elastic copolymer may also be one which is obtained by copolymerizing a combination of two or more monomers selected from the group consisting of ethylene and α-olefins having 3 to 10 carbon atoms with a conjugated diene monomer and/or a non-conjugated diene monomer.

Examples of the above-described α-olefins having 3 to 10 carbon atoms include propylene, 1-butene, 1-pentene, 3-methyl-1-butene, 1-hexene, 1-decene, 3-methyl-1-pentene, 4-methyl-1-pentene and 1-octene.

Examples of the above-described conjugated diene include butadiene, isoprene and chloroprene.

Examples of the above-described non-conjugated diene monomer include dicyclopentadiene, 1,4-hexadiene, 1,5-cyclooctadiene, 5-methylene-2-norbornene and 5-ethylidene-2-norbornene.

Examples of the above-described cross-linking agent include organic peroxides such as 2,5-dimethyl-2,5-di(t-butylperoxy)hexane, 2,5-dimethyl-2,5-di(t-butylperoxy)hexyne-3, 1,3-bis(t-butylperoxyisopropyl)benzene, 1,1-di(t-butylperoxy)3,5,5-trimethylcyclohexane, 2,5-dimethyl-2,5-di(peroxybenzoyl)hexyne-3 and dicumyl peroxide.

The above-described organic peroxide is added in an amount of 0.005 to 2.0 parts by mass, preferably 0.01 to 0.6 parts by mass, with respect to 100 parts by mass of the thermoplastic elastomer. When the amount is less than 0.005 parts by mass, the effect of crosslinking reaction is limited, while when the amount is greater than 2.0 parts by mass, it becomes difficult to control the reaction and such a large amount is thus economically disadvantageous. Further, the organic peroxide may be mixed with a diluent to be used in the form of a liquid or powder substance.

Examples of the diluent include oils, organic solvents and inorganic fillers (such as silica and talc).

Examples of the above-described cross-linking auxiliary include those which are capable of increasing the crosslinking degree of a crosslinked-type thermoplastic elastomer and thus improving the physical properties of the resulting thermoplastic elastomer composition, and a cross-linking auxiliary which has a plurality of double bonds in the molecule is preferably used.

Examples of such cross-linking auxiliary include tetraethylthiuram disulfide (TETD), tetramethylthiuram disulfide (TMTD), N,N'-m-phenylenebismaleimide, toluylenebismaleimide, p-quinonedioxime, nitrobenzene, diphenylguanidine, divinylbenzene, ethylene glycol dimethacrylate, polyethylene glycol dimethacrylate, trimethylolpropane trimethacrylate and allylmethacrylate. These cross-linking auxiliaries may be used individually, or a plurality thereof may be used in combination.

The above-described cross-linking auxiliary is added in an amount of preferably 0.01 to 4.0 parts by mass, more preferably 0.05 to 2.0 parts by mass, with respect to 100 parts by mass of the thermoplastic elastomer. When the amount is less than 0.01 parts by mass, the effect of the addition may not be easily attained, while an amount of greater than 4 parts by mass may be economically disadvantageous.

In cases where the thermoplastic elastomer is cross-linked using an electron beam, it is desired that the irradiation dose of the electron beam be 1 kGray to 100 kGray. When the irradiation dose is less than 1 kGray, the moldability of the thermoplastic elastomer may be poor when it is melted, while when the irradiation dose is 100 kGray or greater, the molecular chain may be broken and/or the resultant may become sticky.

In the thermoplastic elastomer composition according to the present invention, in order to improve the interfacial adhesion between the polyolefin resin and crosslinked rubber, a compatibilizing agent may be added as well. Examples of the compatibilizing agent include silane coupling agents such as silane-modified olefin resins and silane-modified olefin-based rubbers; and adhesive resins (e.g., polystyrene-polybutadiene-polystyrene block copolymers, polyolefin-based grafts and comb-type grafts).

Examples of the above-described lubricant include the same ones as those exemplified in the above. The above-described lubricant is added in an amount of preferably 0.03 to 2 parts by mass, more preferably 0.04 to 1 part by mass, with respect to 100 parts by mass of the thermoplastic elastomer. When the amount is less than 0.03 parts by mass, the desired lubricity may not be attained, while when the amount is greater than 2 parts by mass, the lubricant component may bleed out to the surface of the resulting molded article of the thermoplastic elastomer composition and/or cause deterioration in the physical properties thereof.

Examples of the above-described antistatic agent include the same ones as those exemplified in the above. Further, the antistatic agent is added in an amount of preferably 0.03 to 2 parts by mass, more preferably 0.04 to 1 part by mass, with respect to 100 parts by mass of the thermoplastic elastomer. When the amount of the antistatic agent is excessively small, the antistatic effect is insufficient, while when the amount is excessively large, the antistatic agent may bleed out to the surface and/or cause deterioration in the physical properties of the thermoplastic elastomer composition.

Examples of the above-described softening agent include process oils and aliphatic cyclic saturated hydrocarbon resins.

Examples of the above-described foaming agent include volatile foaming agents composed of a lower aliphatic hydrocarbon such as propane, butane or pentane, a lower alicyclic hydrocarbon such as cyclobutane or cyclopentane, and a halogenated hydrocarbon such as monochlorodifluoromethane, dichlorodifluoromethane, trichlorodifluoroethane, trichlorotrifluoroethane, dichlorotetrafluoroethane, methyl chloride, ethyl chloride or methylene chloride; gaseous foaming agents such as nitrogen, carbon dioxide gas, oxygen and air; pyrolytic foaming agents composed of sodium bicarbonate, ammonium bicarbonate, dinitrosopentamethylenetetramine, toluenesulfonyl hydrazide, azodicarbonamide, p,p'-oxybisbenzenesulfonylhydrazide, azobisisobutyronitrile or the like. Thereamong, a pyrolytic foaming agent is particularly desirably used.

The amount of the foaming agent to be used is appropriately selected as required.

Mixing of the above-described thermoplastic elastomer and foaming agent is carried out inside an extruder or the like by kneading them while melting the thermoplastic elastomer; however, in cases where a pyrolytic foaming agent is used, it may be mixed with the thermoplastic elastomer in advance before feeding the thermoplastic elastomer to an extruder or the like. Alternatively, the pyrolytic foaming agent may be fed to an extruder or the like separately from the thermoplastic elastomer. Further, in cases where a volatile foaming agent or a gaseous foaming agent is used, for example, the foaming agent may be injected into molten thermoplastic elastomer from the middle section of a screw of a vent-type extruder or the like.

In cases where a foaming agent is used in the thermoplastic elastomer, the thermoplastic elastomer and the foaming agent are extrusion-foamed via a die installed at the tip of an extruder. The shape of the resulting foamed article is arbitrary and it is not particularly restricted; however, the foamed article may be in the form of, for example, a film, a sheet, a pipe or a cylinder.

In the resin composition for a coated member according to the present invention, as required, other additive(s) may also be blended. As a method of blending other additives, the additives may be added at the time of polymerizing the monomer having an ethylenically unsaturated bond or polymerizing the thermoplastic elastomer, as long as the additives do not inhibit the polymerization. Alternatively, other additives may be blended and uniformly dispersed in an amount appropriate for the intended purpose at the time of melt-kneading the polymer obtained by the polymerization of the monomer having an ethylenically unsaturated bond and the thermoplastic elastomer. Here, in cases where other additives are added, it is preferred that the thermoplastic elastomer composition be prepared by kneading or stirring until a uniform composition is attained using a biaxial extruder equipped with a heating device, a Banbury mixer, a pressure kneader, a Henschel mixer, a Brabender kneader, disperser or the like.

Examples of the above-described other additives that may be blended in the resin composition for a coated member according to the present invention include phenolic antioxidants, phosphorus-based antioxidants, sulfur-based antioxidants, ultraviolet absorbers, hindered amine compounds, heavy metal inactivators, nucleating agents, flame retardants, metallic soaps, hydrotalcites, fillers, lubricants, antistatic agents, pigments, dyes and plasticizers.

Examples of the above-described phenolic antioxidants include the same ones as those exemplified in the above and phenolic antioxidants represented by the above-described Formula (1); however, tetrakis[methylene-3-(3',5'-di-t-butyl-4'-hydroxyphenyl)propionate]methane is particularly preferably used since it is relatively inexpensive and has good cost performance.

The phenolic antioxidant used as the above-described other additive is added in an amount of preferably 0.001 to 0.5 parts by mass, particularly preferably 0.01 to 0.3 parts by mass, with respect to a total of 100 parts by mass of the polymer obtained by the polymerization of the monomer having an ethylenically unsaturated bond and the thermoplastic elastomer.

Examples of the above-described phosphorus-based antioxidants include the same ones as those compounds exemplified in the above as the phosphorus-based antioxidant to be added. The above-described phosphorus-based antioxidant is used in an amount of preferably 0.01 to 0.3 parts by mass with respect to a total of 100 parts by mass of the polymer obtained by the polymerization of the monomer having an ethylenically unsaturated bond and the thermoplastic elastomer.

Examples of the above-described sulfur-based antioxidants include the same ones as those exemplified in the above for the thioester-based antioxidant to be added. The sulfur-based antioxidant is used in an amount of preferably 0.01 to 0.3 parts by mass with respect to a total of 100 parts by mass of the polymer obtained by the polymerization of the monomer having an ethylenically unsaturated bond and the thermoplastic elastomer.

Examples of the above-described ultraviolet absorbers include the same ones as those exemplified in the above.

The ultraviolet absorber is used in an amount of 0.001 to 5 parts by mass, more preferably 0.005 to 0.5 parts by mass, with respect to a total of 100 parts by mass of the polymer obtained by the polymerization of the monomer having an ethylenically unsaturated bond and the thermoplastic elastomer.

Examples of the above-described hindered amine-based light stabilizers include the same ones as those exemplified in the above.

The hindered amine-based light stabilizer is used in an amount of 0.001 to 5 parts by mass, more preferably 0.005 to 0.5 parts by mass, with respect to a total of 100 parts by mass of the polymer obtained by the polymerization of the monomer having an ethylenically unsaturated bond and the thermoplastic elastomer.

Examples of the above-described nucleating agents include the same ones as those exemplified in the above.

The nucleating agent is used in an amount of 0.001 to 10 parts by mass, more preferably 0.005 to 5 parts by mass, with respect to a total of 100 parts by mass of the polymer obtained by the polymerization of the monomer having an ethylenically unsaturated bond and the thermoplastic elastomer.

Examples of the above-described flame retardants include the same ones as those exemplified in the above.

The flame retardant is used in an amount of 1 to 70 parts by mass, more preferably 10 to 30 parts by mass, with respect to a total of 100 parts by mass of the polymer obtained by the polymerization of the monomer having an ethylenically unsaturated bond and the thermoplastic elastomer.

Examples of the above-described fillers include the same ones as those exemplified in the above.

Examples of the above-described lubricants include the same ones as those exemplified in the above.

Examples of the above-described antistatic agents include the same ones as those exemplified in the above.

As for a method of molding the polymer obtained by the present invention, there is not particular restriction, and the polymer can be molded by a known molding method such as extrusion molding, injection molding, hollow molding, blow molding or compression molding.

The coated member obtained by the present invention can be used in the form of, for example, but not limited to, a film, a sheet, a cylinder, a box or a sphere. Specific examples of the use of the coated member include automobile exterior parts where the outer appearance of the paint surface is given high importance, such as a bumper, a spoiler, a side guard molding or a radiator grill.

### EXAMPLES

The present invention will now be described in more detail by way of examples and comparative examples thereof; however, the present invention is not restricted thereto by any means. The evaluations in the examples and comparative examples were performed by the following methods.

### <Examples 4-1 to 4-4 and Comparative Examples 4-1 to 4-10>

### [Production Example 1] Polymerization of Monomer having an Ethylenically Unsaturated Bond

In accordance with the following procedures ([1] Preparation of Solid Ti Catalyst Component, [2] Preparation of Phenoxide Solution, [3] Preparation of Phosphite Solution and [4] Polymerization of Propylene), a polypropylene powder was obtained.

### (Preparation of Solid Ti Catalyst Component)

After preparing a homogeneous solution by allowing 4.76 g (50 mmol) of anhydrous magnesium chloride, 25 ml of decane and 23.4 ml (150 mmol) of 2-ethylhexyl alcohol to react with heating at 130°C for 2 hours, 1.11 g (7.5 mmol) of phthalic anhydride was added to the thus obtained homogeneous solution and the resulting mixture was further allowed to react with stirring at 130°C for 1 hour, thereby dissolving phthalic anhydride in the homogeneous solution. The thus obtained homogeneous solution was cooled to room temperature and the entire amount thereof was then dropwisely charged to 200 ml (1.8 mol) of titanium tetrachloride, which had been kept at -20°C, over a period of 1 hour. Thereafter, the resultant was heated to 110°C over a period of 4 hours and once the temperature reached 110°C, 2.68 ml (12.5 mmol) of diisobutyl phthalate was added and the resulting mixture was maintained at this temperature for 2 hours under stirring. After completion of the 2-hour reaction, the resulting solids were recovered by hot filtration and resuspended in 200 ml of titanium tetrachloride. Then, the thus obtained suspension was once again allowed to react with heating at 110°C for 2 hours. Thereafter, the resulting solids were recovered again by hot filtration and thoroughly washed with 110°C decane and hexane until no free titanium compound was detected in the washings, thereby obtaining a solid Ti catalyst component. The solid Ti catalyst component synthesized by the above-described production method was stored in the form of a heptane slurry and a portion thereof was taken out and dried and the catalyst composition was analyzed. The solid Ti catalyst component obtained in this manner was determined to have the following composition: 3.1 % by weight of titanium, 56.0% by weight of chlorine, 17.0% by weight of magnesium and 20.9% by weight of isobutyl phthalate.

### (Preparation of Phenoxide Solution)

In a flask whose atmosphere had been replaced with nitrogen, 10 ml of dry heptane, 54 mg of triethylaluminum and 161 mg of the respective phenolic antioxidant shown in Table 4 were mixed with stirring to mask the phenolic antioxidant, thereby preparing a phenoxide solution having a phenolic antioxidant concentration of 16 mg/mL.

### (Preparation of Phosphite Solution)

In a flask whose atmosphere had been replaced with nitrogen, 144 mg of the respective phosphorus-based antioxidant shown in Table 4 and 6 mL of heptane were added and mixed with stirring to prepare a phosphite solution having a phosphorus-based antioxidant concentration of 24 mg/mL.

### (Polymerization of Propylene)

To a 2L autoclave whose atmosphere had been replaced with nitrogen, 1.26 mmol of triethylaluminum, the thus obtained phenoxide solution and phosphite solution were added in such a manner to attain the respective formulations of stabilizer composition shown in Table 4. Then, 0.126 mmol of dicyclopentyldimethoxysilane and the heptane slurry of the solid Ti catalyst component (8.4 µmol in terms of Ti) were sequentially added. The atmosphere inside the autoclave was replaced with propylene and hydrogen was introduced at a pressure of 0.12 MPa. Further, propylene was introduced such that the total pressure became 3.82 MPa, thereby performing pre-polymerization at 30°C for 3 minutes. Thereafter, while introducing ethylene at a rate of 0.12 g/min, the temperature of the autoclave was raised to 70°C and the total pressure inside the autoclave was adjusted to 3.82 MPa with propylene to perform polymerization reaction for 1 hour. After cooling the autoclave to 40°C, the polymerization reaction was quenched by adding 15 ml of ethanol. Propylene was purged and the resulting polymer was then dried in vacuum at 40°C for 5 hours to obtain polypropylene powder A.

It is noted here that the amounts of the blended stabilizer shown in Table 4 are each an amount (parts by mass) with respect to a total of 100 parts by mass of the polymer obtained from the monomer having an ethylenically unsaturated bond and the thermoplastic elastomer. Further, the amounts of the blended antioxidant shown in Table 4 are each an amount of the antioxidant by itself prior to being masked. In cases where a stabilizer was added at the time of polymerizing to produce a thermoplastic elastomer, the amount of the blended stabilizer in the whole resin composition is a total of the amount added at the time of polymerizing a monomer having an ethylenically unsaturated bond to produce a polymer and the amount at the time of polymerizing to produce a thermoplastic elastomer. This also applies to the following Production Examples in the same manner.

### [Production Example 2] Polymerization of Monomer having an Ethylenically Unsaturated Bond

Polypropylene powder B was obtained in the same manner as in the above-described Production Example 1, except that neither the phenoxide solution nor the phosphite solution was added.

### [Production Example 3] Production of Thermoplastic Elastomer

In accordance with the following procedures, ([1] Preparation of Solid Catalyst, [2] Preparation of Phenoxide Solution and [3] Polymerization), a thermoplastic elastomer A was obtained.

### (Preparation of Solid Catalyst)

In 100 mL of toluene, 37.5 g (0.15 mol) of fine powdery CuSO₄·5H₂O was suspended at 20°C with stirring and a mixed solution of 50 mL (0.52 mol) of trimethylaluminum and 150 mL of toluene was slowly added thereto dropwise. After completion of the dropwise addition, the resultant was allowed to react at 20°C for another 48 hours. Then, after filtering the reaction solution to remove solid copper sulfate, toluene and unreacted trimethylaluminum were removed by vacuum distillation at a pressure of 266.6 Pa and a temperature of 35°C, thereby obtaining methylaluminoxane in an amount of 17 g (0.29 mol).

To 2 L of hot water at about 95°C, 500 g of a high-purity γ-alumina (manufactured by JGC Catalysts and Chemicals Ltd, trade name: ACP-1; average particle size: about 60 µm; specific surface area: about 300 m²/g; pore volume: about 0.7 mL/g) was added, and the resulting mixture was stirred for 3 hours, followed by removal of the water. After repeating these operations 10 more times, the resultant was washed with acetone and then dried. The thus dried alumina was heated at 450°C for 6 hours under dry nitrogen gas flow to remove the adsorbed water.

This alumina in an amount of 7 g was suspended in 50 mL of n-hexane and 82 mg (1.4 mmol in terms of aluminum unit) of methylaluminoxane dissolved in 10 mL of toluene was added to the resulting suspension. After stirring the thus obtained mixture at room temperature for 30 minutes, 9 mL of 0.16M solution of tetrabenzylzirconium dissolved in toluene was added, and the resultant was stirred at room temperature for another 30 minutes. Neither zirconium nor aluminum was detected in the liquid phase.

As a result of calculation based on the amounts of the adsorbed zirconium and aluminum, the solid catalyst prepared in this manner was found to contain 0.2 mmol/g of zirconium and 0.2 mmol/g of aluminum.

### (Preparation of Phenoxide Solution)

To 50 ml of toluene, a total of 5.0 g of triisobutylaluminum and the stabilizer(s) (phenolic antioxidant(s)) shown in Table 4 was added such that the molar ratio of the functional groups became 2:1. The resulting mixture was then stirred at room temperature for 30 minutes to prepare a phenoxide solution.

### (Polymerization)

To a 100L stainless-steel autoclave, hydrogen and ethylene were charged under a nitrogen atmosphere at 25°C such that the hydrogen partial pressure and the ethylene partial pressure became 0.059 MPa and 0.29 MPa, respectively, and 25 kg of propylene was further charged thereto. The temperature of the autoclave was raised to 50°C and, using a pressure equalizer, a heptane slurry of the solid Ti catalyst component (3 mmol in terms of zirconium) was added. Then, after adding the phenoxide solution prepared in the above such that the amount of the added stabilizer(s) in the resulting polymer became as shown in Table 4, ethylene was fed to perform copolymerization for 2 hours while maintaining a temperature of 60°C and a total pressure of 2.84 MPa. Thereafter, the polymerization reaction was quenched by adding 50 mL of isopropyl alcohol. Unreacted propylene was removed and the polymerization product was recovered to obtain a white spherical thermoplastic elastomer A.

### [Production Example 4] Production of Thermoplastic Elastomer

A thermoplastic elastomer B was obtained in the same manner as in the above-described Production Example 3, except that no phenoxide solution was added.

### (Kneading)

To 100 parts by mass of a mixture obtained by mixing the polypropylene powder obtained in the above-described Production Example 1 or 2 and the thermoplastic elastomer obtained in the above-described Production Example 3 or 4 at a weight ratio of 2/1 or 4/1, 0.05 parts by mass of calcium stearate, 10 parts by mass of talc (manufactured by NIPPON TALC Co., Ltd.; trade name: MICRO ACE P-4) and 0.2 parts by mass of a light stabilizer (manufactured by ADEKA Corporation; trade name: ADEKA STAB LA-62) were added and mixed. It is noted here that, when the polypropylene powder obtained in Production Example 2 or the elastomer obtained in Production Example 4 was used, the stabilizer composition shown in Table 4 was also added and mixed. Then, the resulting mixture was melt-kneaded using a biaxial extruder (LABO-PLASTOMILL MICRO, manufactured by Toyo Seiki Seisaku-sho, Ltd.) at a melting temperature of 230°C and a screw speed of 50 rpm to obtain a pellet.

The thus obtained pellet was injection-molded using a laboratory micro-injection molding machine (manufactured by DSM Xplore; Compounder 15, Injection molder 12) at an injection temperature of 220°C and a die temperature of 50°C, thereby preparing a tabular test piece of 50 mm × 90 mm × 2 mm. After the injection molding, the thus obtained test piece was left to stand for 48 hours in a 23°C incubator and then subjected to the following measurements. The results thereof were evaluated by the following procedures.

### (Secondary Adhesion with Coating Film)

The thus obtained test piece was exposed to a saturated vapor of 1,1,1-trichloroethane for 30 seconds and the surface was washed. Then, the resulting test piece was dried for 10 minutes in an oven whose temperature was set at 90°C and subsequently subjected to a plasma treatment using a microwave plasma treatment apparatus (BH-10, manufactured by NISSIN Inc.).

After the plasma treatment, the test piece was painted with acryl-melamine-type pearl mica in accordance with the following procedures (1) to (7). The painting was performed by using R320, R331 and R341 (trade names; manufactured by Nippon Bee Chemical Co., Ltd.), with R320 (trade name; manufactured by Nippon Bee Chemical Co., Ltd.) being a color base, R331 (trade name; manufactured by Nippon Bee Chemical Co., Ltd.) being a mica base and R341 (trade name; manufactured by Nippon Bee Chemical Co., Ltd.) being a clear paint.

### <Painting Method>

(1) Color base painting, at a film thickness of 15 µm
(2) After 5-minute setting, drying at 120°C for 20 minutes
(3) Mica base painting, at a film thickness of 15 µm
(4) 3-minute flushing
(5) Clear painting, at a film thickness of 25 µm
(6) After 5-minute setting, bake-finishing at 120°C for 20 minutes
(7) Leaving to stand at room temperature for 48 hours

The test piece thus painted with the acryl-melamine-type pearl mica by the above-described procedures was immersed in 40°C water for 240 hours. Then, using a cutter knife, incisions were made on the paint coating film in a grid form to separate it into 100 1-mm square sections, and a cellophane tape was pasted thereon. The cellophane tape was removed and the number of sections that were not removed by the cellophane tape was measured to evaluate the adhesion of the coating film.

### (Heat-yellowing Resistance)

Further, the above-described test piece painted with the acryl-melamine-type pearl mica was left to stand in a 90°C incubator for 240 hours. Then, the change in the yellowness of the coating film before and after heating (Δb) was measured to evaluate the heat-yellowing resistance. The measurement was performed by using a spectrocolorimeter (model: T-4, manufactured by Suga Test Instruments Co., Ltd.).

### (Elution Test)

To a pressure-resistant reaction vessel, 215 ml of 95% ethanol aqueous solution was loaded as an extraction solvent. The reaction vessel was hermetically sealed and left to stand for 1 day in a 121°C incubator and a 49°C incubator. After confirming that the temperature of the extraction solvent had reached 121 °C, three of the above-described test pieces, which were skewered with a glass rod, were immersed in the extraction solvent in such a manner that the test pieces did not float. Then, the reaction vessel was returned to the 121°C incubator and left to stand therein for 2 hours.

After the 2-hour incubation, the test pieces were taken out and the surfaces thereof were washed with fresh extraction solvent. Then, the three test pieces were again skewered with a glass rod and immersed in the extraction solvent in the pressure-resistant reaction vessel which had been left to stand in the 49°C incubator. The reaction vessel was hermetically sealed, returned to the 49°C incubator and left to stand therein for 10 days. After the 10-day incubation, the test pieces were taken out and the surfaces thereof were washed with fresh extraction solvent. The extraction solvents used in the 121°C and 49°C incubators and the extraction solvents used in the washing operations were recovered and concentrated under reduced pressure using a rotary evaporator.

The amount of the stabilizer composition extracted in each of the thus concentrated extraction solvents was quantitatively analyzed by the following method.

### (Quantitative Analysis)

Using gas chromatography [apparatus: Gas Chromatography GC2010, manufactured by Shimadzu Corporation, column: BPX5 manufactured by SGE Analytical Science Pty Ltd. (30 m × 0.25 mmID × 0.25 µm), injection temperature: 330°C, detector temperature: 330°C, measurement condition: heating rate = 15°C/min], the respective blended additives were dissolved in chloroform and a calibration curve was prepared to quantitatively analyze the additive extracted in 95% ethanol aqueous solution. The term "extracted amount" represents a concentration per unit amount of the extraction solvent.

**[Table 4]**

| | | | Example 4-1 | Example 4-2 | Example 4-3 | Example 4-4 |
|---|---|---|---|---|---|---|
| | Composition of polypropylene powder | Polypropylene powder A | 67 | 67 | 80 | 80 |
| | | Polypropylene powder B | - | - | - | - |
| | | AO-1¹⁾ | 0.02 | 0.0067 | 0.024 | 0.008 |
| | | AO-2²⁾ | - | - | - | - |
| | | AO-3³⁾ | - | - | - | - |
| | | P-1⁴⁾ | - | 0.03 | - | 0.03 |
| | | Method of addition⁵⁾ | at the time of polymerization | at the time of polymerization | at the time of polymerization | at the time of polymerization |
| Additive formulation | Composition of elastomer | Elastomer A | 33 | 33 | 20 | 20 |
| | | Elastomer B | - | - | - | - |
| | | AO-1¹⁾ | 0.01 | 0.0033 | 0.006 | 0.002 |
| | | AO-2²⁾ | - | - | - | - |
| | | AO-3³⁾ | - | - | - | - |
| | | Method of addition⁵⁾ | at the time of polymerization | at the time of polymerization | at the time of polymerization | at the time of polymerization |
| | Other | Talc⁶⁾ | 10 | 10 | 10 | 10 |
| | | LA-62⁷⁾ | 0.2 | 0.2 | 0.2 | 0.2 |
| | | Ca-St⁸⁾ | 0.05 | 0.05 | 0.05 | 0.05 |
| Evaluation | | Secondary adhesion with coating film | 100/100 | 100/100 | 100/100 | 100/100 |
| | | Heat-yellowing resistance (Δb) | 0.35 | 0.28 | 0.42 | 0.34 |
| | | Ratio of elution⁹⁾ | 0.3 | 0.3 | 0.3 | 0.3 |
| | | Note | - | - | - | - |

| | | | | | | |
|---|---|---|---|---|---|---|
| ¹⁾ AO-1 (phenolic antioxidant): 3-(3,5-di-tert-butyl-4-hydroxyphenyl)-N-octadecyl propionamide ²⁾ AO-2 (phenolic antioxidant): tetrakis[methylene-3-(3,5-di-t-butyl-4-hydroxyphenyl)propionate]methane ³⁾ AO-3 (phenolic antioxidant): n-octadecyl-3-(3',5'-di-t-butyl-4'-hydroxyphenyl)propionate ⁴⁾ P-1 (phosphorus-based antioxidant): tris(2,4-di-tert-butylphenyl)phosphite ⁵⁾ Method of addition: at the time of polymerization: the antioxidant was added at the time of polymerizing the monomer. at the time of granulation: after the polymerization of the monomer, the antioxidant was added and mixed and the resulting mixture was granulated by kneading at 250°C. ⁶⁾ Talc: manufactured by NIPPON TALC Co., Ltd.; trade name: MICRO ACE P-4 ⁷⁾ LA-62: light stabilizer, manufactured by ADEKA Corporation; trade name (an ester compound between 1,2,3,4-butanetetracarboxylic acid and 1,2,2,6,6-pentamethyl-4-piperidyltridecyl) ⁸⁾ Ca-St: calcium stearate ⁹⁾ Ratio of elution: represents the ratio of the amount of the eluted antioxidant in the respective formulations, taking the amount of the eluted antioxidant in Comparative Example 4-4 as 1. | | | | | | |

**[Table 5]**

| | | | Comparative Example 4-1 | Comparative Example 4-2 | Comparative Example 4-3 | Comparative Example 4-4 | Comparative Example 4-5 |
|---|---|---|---|---|---|---|---|
| | Composition of polypropylene powder | Polypropylene powder A | 67 | 67 | - | - | - |
| | | Polypropylene powder B | - | - | 67 | 67 | 67 |
| | | AO-1¹⁾ | - | - | - | - | - |
| | | AO-2²⁾ | 0.2 | - | 0.02 | 0.2 | 0.067 |
| | | AO-3³⁾ | - | 0.2 | - | - | - |
| | | P-1⁴⁾ | - | - | - | - | 0.3 |
| Additive formulation | | Method of addition⁵⁾ | at the time of polymerization | at the time of polymerization | at the time of granulation | at the time of granulation | at the time of granulation |
| | Composition of elastomer | Elastomer A | 33 | 33 | - | - | - |
| | | Elastomer B | - | - | 33 | 33 | 33 |
| | | AO-1¹⁾ | - | - | - | - | - |
| | | AO-2²⁾ | 0.1 | - | 0.01 | 0.1 | 0.033 |
| | | AO-3³⁾ | - | 0.1 | - | - | - |
| | | Method of addition⁵⁾ | at the time of polymerization | at the time of polymerization | at the time of granulation | at the time of granulation | at the time of granulation |
| | Other | Talc⁶⁾ | 10 | 10 | 10 | 10 | 10 |
| | | LA-62⁷⁾ | 0.2 | 0.2 | 0.2 | 0.2 | 0.2 |
| | | Ca-St⁸⁾ | 0.05 | 0.05 | 0.05 | 0.05 | 0.05 |
| Evaluation | | Secondary adhesion with coating film | NG | NG | NG | 95/100 | 91/100 |
| | | Heat-yellowing resistance (Δb) | NG | NG | NG | 2.02 | 1.21 |
| | | Ratio of elution⁹⁾ | NG | NG | NG | 1.0 | 1.2 |
| | | Note | Deterioration of resin during molding | Deterioration of resin during molding | Deterioration of resin during molding | - | - |

**[Table 6]**

| | | | Comparative Example 4-6 | Comparative Example 4-7 | Comparative Example 4-8 | Comparative Example 4-9 | Comparative Example 4-10 |
|---|---|---|---|---|---|---|---|
| | Composition of polypropylene powder | Polypropylene powder A | - | - | - | - | - |
| | | Polypropylene powder B | 67 | 67 | 67 | 67 | 67 |
| | | AO-1¹⁾ | - | - | - | 0.02 | 0.0067 |
| | | AO-2²⁾ | - | - | - | - | - |
| | | AO-3³⁾ | 0.02 | 0.2 | 0.067 | - | - |
| | | P-1⁴⁾ | - | - | 0.3 | - | 0.3 |
| | | Method of addition⁵⁾ | at the time of granulation | at the time of granulation | at the time of granulation | at the time of granulation | at the time of granulation |
| Additive formulation | Composition of elastomer | Elastomer A | - | - | - | - | - |
| | | Elastomer B | 33 | 33 | 33 | 33 | 33 |
| | | AO-1¹⁾ | - | - | - | 0.01 | 0.0033 |
| | | AO-2²⁾ | - | - | - | - | - |
| | | AO-3³⁾ | 0.01 | 0.1 | 0.033 | - | - |
| | | Method of addition⁵⁾ | at the time of granulation | at the time of granulation | at the time of granulation | at the time of granulation | at the time of granulation |
| | Other | Talc⁶⁾ | 10 | 10 | 10 | 10 | 10 |
| | | LA-62⁷⁾ | 0.2 | 0.2 | 0.2 | 0.2 | 0.2 |
| | | Ca-St⁸⁾ | 0.05 | 0.05 | 0.05 | 0.05 | 0.05 |
| Evaluation | | Secondary adhesion with coating film | NG | 92/100 | 89/100 | NG | NG |
| | | Heat-yellowing resistance (Δb) | NG | 1.72 | 1.02 | NG | NG |
| | | Ratio of elution⁹⁾ | NG | 1.0 | 1.2 | NG | NG |
| | | Note | Deterioration of resin during molding | - | - | Deterioration of resin during molding | Deterioration of resin during molding |

According to the results of Comparative Examples 4-1 and 4-2 shown in Table 5, when a phenolic antioxidant different from the one represented by the Formula (1) was added at the time of polymerizing the polypropylene or elastomer and the resultant was then molded, the resulting polypropylene resin and elastomer were deteriorated, so that a test piece could not be prepared.

Further, according to the results of Comparative Examples 4-3, 4-6, 4-9 and 4-10, when the amount of the antioxidant added at the time of the granulation step was 0.03 parts by mass, the resulting resin was deteriorated during the molding process, so that a test piece could not be prepared.

Moreover, according to the results of Comparative Examples 4-4, 4-5, 4-7 and 4-8, although the heat resistance was improved by increasing the amount of the antioxidant, the resulting molded articles were markedly colored and had a hygienic problem with the ratio of elution being high, which were not satisfactory.

In contrast, according to the results of Example 4-1, the coated member of the present invention showed good adhesion with a coating film and good heat-yellowing resistance and had only a small amount of elution. From the results of Example 4-2, it was confirmed that the heat resistance can be further improved by further addition of a phosphorus-based antioxidant.

Moreover, from the results of Examples 4-3 and 4-4, it was confirmed that there was no problem even when the ratio of the polymer and the thermoplastic elastomer was 4/1 in terms of mass ratio.

## Claims

1. A method of producing a resin composition for a coated member, which resin composition comprises a polymer obtained by polymerization of a monomer having an ethylenically unsaturated bond and a thermoplastic elastomer, said method being **characterized by** comprising the steps of:
(A) adding, before or during said polymerization of said monomer having an ethylenically unsaturated bond, a phenolic antioxidant represented by the following Formula (1), that is masked with an organoaluminum compound, to at least one of a catalyst system, a polymerization system and a piping, and performing said polymerization such that said phenolic antioxidant is incorporated in an amount of 0.001 to 0.5 parts by mass with respect to a total of 100 parts by mass of said polymer obtained by said polymerization of said monomer having an ethylenically unsaturated bond and said thermoplastic elastomer; and
(B) melt-kneading said polymer obtained by said polymerization of said monomer having an ethylenically unsaturated bond with said thermoplastic elastomer: 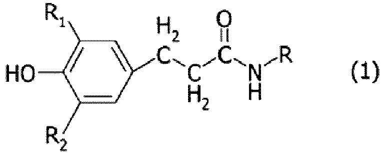 (wherein, R₁ and R₂ each independently represent a hydrogen atom, an alkyl group having 1 to 5 carbon atoms which is optionally branched or an arylalkyl group having 7 to 9 carbon atoms; and R represents an alkyl group having 1 to 30 carbon atoms which is optionally branched, an alkenyl group having 2 to 30 carbon atoms which is optionally branched, a cycloalkyl group having 3 to 12 carbon atoms which is optionally substituted or an aryl group having 6 to 18 carbon atoms which is optionally substituted);
(C) molding the composition from step B into an article;
wherein, in said step (B), said polymer obtained by polymerization of said monomer having an ethylenically unsaturated bond and said thermoplastic elastomer are melt-kneaded at a mass ratio, said polymer obtained by polymerization of said monomer having an ethylenically unsaturated bond/said thermoplastic elastomer, of 2/1 to 4/1.

2. The method according to claim 1, wherein said thermoplastic elastomer is obtained by polymerization of a monomer having an ethylenically unsaturated bond, before or during which polymerization of said monomer having an ethylenically unsaturated bond a phenolic antioxidant represented by said Formula (1), that is masked with an organoaluminum compound, is added to at least one of a catalyst system, a polymerization system and a piping.

3. The method according to claim 1, which further comprises the step of adding, before or during said polymerization of said monomer having an ethylenically unsaturated bond, a phosphorus-based antioxidant to at least one of said catalyst system, said polymerization system and said piping, such that said phosphorus-based antioxidant is incorporated in an amount of 0.001 to 3 parts by mass with respect to a total of 100 parts by mass of said polymer obtained by said polymerization of said monomer having an ethylenically unsaturated bond and said thermoplastic elastomer.

4. The method according to claim 1, wherein said organoaluminum compound is a trialkylaluminum.

5. The method of any of claims 1 to 4, wherein the thermoplastic elastomer is a block copolymer, preferably a copolymer of ethylene and an α-olefin.

6. A method of producing a coated member, which is **characterized by** comprising the step of coating the molded article of a resin composition obtained by the method according to claim 1.

7. The method according to claim 6, which comprises the step of subjecting said molded article of said resin composition to a plasma treatment before said step of coating.

8. The method according to any preceding claim, wherein said monomer having an ethylenically unsaturated bond is selected from ethylene, propylene, 1-butene, 1-hexene, 3-methyl-1-butene, 3-methyl-1-pentene, 4-methyl-1-pentene, vinylcycloalkane, styrene and other α-olefins, preferably ethylene or a combination of α-olefin monomers, more preferably ethylene by itself, a combination of ethylene and propylene, a combination of ethylene, propylene and butene, or a combination of an α-olefin monomer and a non-conjugated diene monomer.

9. The method according to any preceding claim, wherein the phenolic antioxidant of formula (1) is selected from the following compounds 1 to 16;

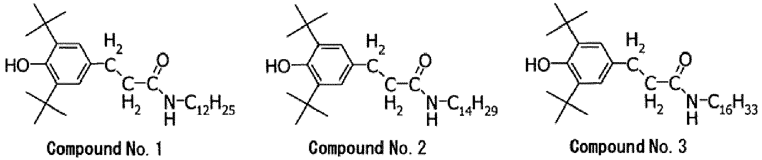

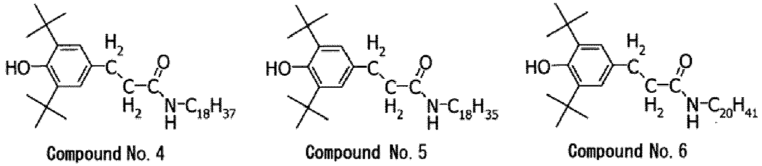

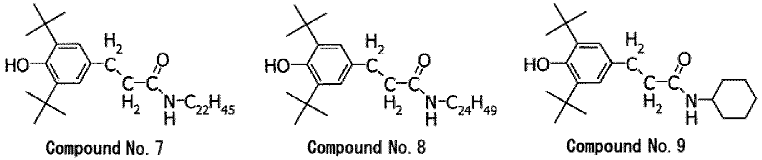

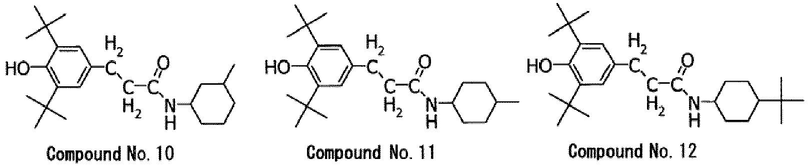

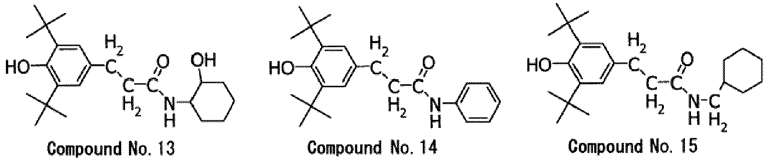

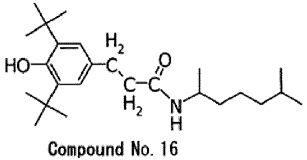

10. The method of claim 9, wherein the phenolic antioxidant is compound no. 4.

11. A coated member, **characterized by** being produced by the method according to claim 6, wherein the resin composition comprises a light stabilizer and a filler.

## Patentansprüche

1. Verfahren zum Herstellen einer Harzzusammensetzung für ein beschichtetes Element, wobei die Harzzusammensetzung ein durch Polymerisierung eines Monomers mit einer ethylenisch ungesättigten Bindung und eines thermoplastischen Elastomers gewonnenes Polymer umfasst, wobei das Verfahren **dadurch gekennzeichnet ist, dass** es die folgenden Schritte umfasst:
(A) Hinzufügen, vor oder während der Polymerisierung des Monomers mit einer ethylenisch ungesättigten Bindung, eines durch die folgende Formel (1) dargestellten phenolischen Antioxidans, das mit einer Organoaluminiumverbindung überdeckt ist, zu einem Katalysatorsystem, einem Polymerisierungssystem und/oder einer Rohrleitung und Durchführen der Polymerisierung, sodass das phenolische Antioxidans in einer Menge von 0,001 bis 0,5 Massenanteilen bezogen auf insgesamt 100 Massenanteile des durch die Polymerisierung des Monomers mit einer ethylenisch ungesättigten Bindung und des thermoplastischen Elastomers gewonnenen Polymers enthalten ist; und
(B) Schmelzkneten des durch die Polymerisierung des Monomers mit einer ethylenisch ungesättigten Bindung mit dem thermoplastischen Elastomer gewonnenen Polymers: 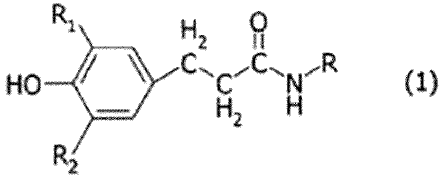 (wobei R₁ und R₂ jeweils unabhängig ein Wasserstoffatom, eine Alkylgruppe mit 1 bis 5 Kohlenstoffatomen, die optional verzweigt ist, oder eine Arylalkylgruppe mit 7 bis 9 Kohlenstoffatomen darstellen; und R eine Alkylgruppe mit 1 bis 30 Kohlenstoffatomen, die optional verzweigt ist, eine Alkenylgruppe mit 2 bis 30 Kohlenstoffatomen, die optional verzweigt ist, eine Cycloalkylgruppe mit 3 bis 12 Kohlenstoffatomen, die optional substituiert ist, oder eine Arylgruppe mit 6 bis 18 Kohlenstoffatomen, die optional substituiert ist, darstellt);
(C) Formen der Zusammensetzung aus Schritt B in ein Erzeugnis;
wobei in Schritt (B) das durch Polymerisierung des Monomers mit einer ethylenisch ungesättigten Bindung gewonnene Polymer und das thermoplastische Elastomer bei einem Massenverhältnis von 2/1 bis 4/1 schmelzgeknetet werden, wobei das Polymer durch Polymerisierung des Monomers mit einer ethylenisch ungesättigten Bindung/des thermoplastischen Elastomers gewonnen wird.

2. Verfahren nach Anspruch 1, wobei das thermoplastische Elastomer durch Polymerisierung eines Monomers mit einer ethylenisch ungesättigten Bindung gewonnen wird, wobei vor oder während der Polymerisierung des Monomers mit einer ethylenisch ungesättigten Bindung ein durch die Formel (1) dargestelltes phenolisches Antioxidans, das mit einer Organoaluminiumverbindung überdeckt ist, zu einem Katalysatorsystem, einem Polymerisierungssystem und/oder einer Rohrleitung hinzugefügt wird.

3. Verfahren nach Anspruch 1, das ferner den Schritt des Hinzufügens eines Antioxidans auf Phosphorbasis zu dem Katalysatorsystem, dem Polymerisierungssystem und/oder der Rohrleitung vor oder während der Polymerisierung des Monomers mit einer ethylenisch ungesättigten Bindung umfasst, sodass das Antioxidans auf Phosphorbasis in einer Menge von 0,001 bis 3 Massenanteilen bezogen auf insgesamt 100 Masseanteile des durch die Polymerisierung des Monomers mit einer ethylenisch ungesättigten Bindung und des thermoplastischen Elastomers gewonnenen Polymers enthalten ist.

4. Verfahren nach Anspruch 1, wobei die Organoaluminiumverbindung ein Trialkylaluminium ist.

5. Verfahren nach einem der Ansprüche 1 bis 4, wobei das thermoplastische Elastomer ein Blockcopolymer, vorzugsweise ein Copolymer aus Ethylen und einem α-Olefin ist.

6. Verfahren zum Herstellen eines beschichteten Elements, das **dadurch gekennzeichnet ist, dass** es den Schritt des Beschichtens des Formerzeugnisses aus einer durch das Verfahren nach Anspruch 1 gewonnenen Harzzusammensetzung umfasst.

7. Verfahren nach Anspruch 6, das den Schritt dessen umfasst, dass das Formerzeugnis aus der Harzzusammensetzung vor dem Beschichtungsschritt einer Plasmabehandlung ausgesetzt wird.

8. Verfahren nach einem der vorhergehenden Ansprüche, wobei das Monomer mit einer ethylenisch ungesättigten Bindung ausgewählt ist aus Ethylen, Propylen, 1-Buten, 1-Hexen, 3-Methyl-1-buten, 3-Methyl-1-penten, 4-Methyl-1-penten, Vinylcycloalkan, Styrol und anderen α-Olefinen, vorzugsweise Ethylen oder einer Kombination aus α-Olefinmonomeren, stärker bevorzugt Ethylen allein, einer Kombination aus Ethylen und Propylen, einer Kombination aus Ethylen, Propylen und Buten oder einer Kombination aus einem α-Olefinmonomer und einem nicht konjugierten Dienmonomer.

9. Verfahren nach einem der vorhergehenden Ansprüche, wobei das phenolische Antioxidans mit der Formel (1) aus den folgenden Verbindungen 1 bis 16 ausgewählt ist;

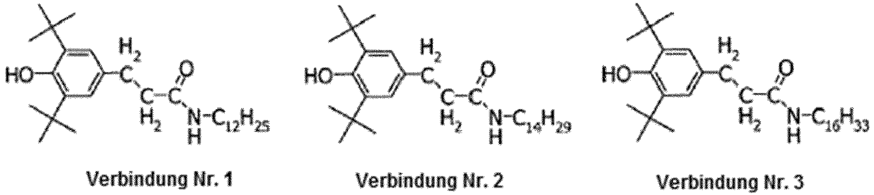

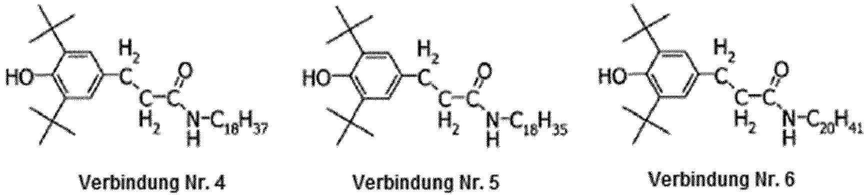

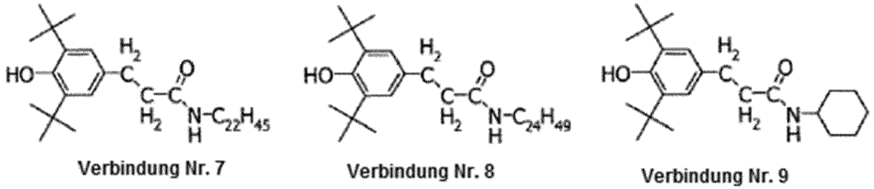

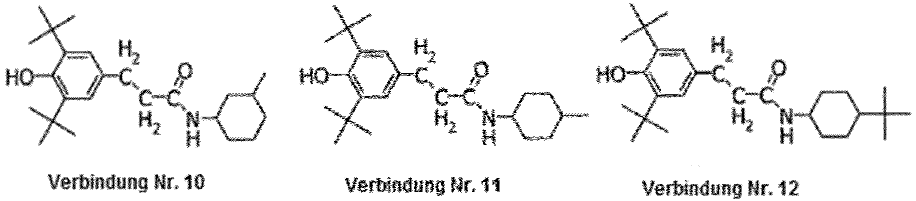

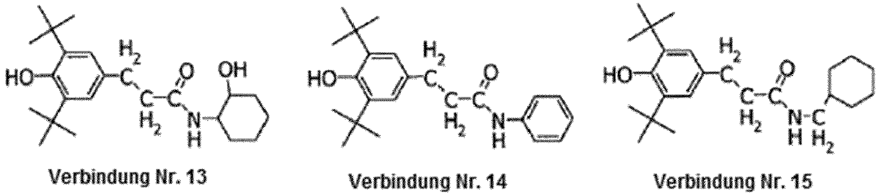

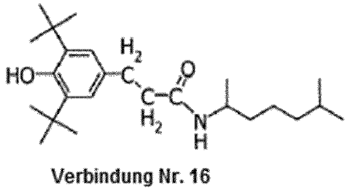

10. Verfahren nach Anspruch 9, wobei das phenolische Antioxidans Verbindung Nr. 4 ist.

11. Beschichtetes Element, **dadurch gekennzeichnet, dass** es durch das Verfahren nach Anspruch 6 hergestellt wird, wobei die Harzzusammensetzung einen Lichtstabilisator und einen Füllstoff umfasst.

## Revendications

1. Procédé de production d'une composition à base de résine pour un élément revêtu, laquelle composition à base de résine comprend un polymère obtenu par polymérisation d'un monomère ayant une liaison éthyléniquement insaturée et un élastomère thermoplastique, ledit procédé étant **caractérisé en ce qu'**il comprend les étapes consistant à:
(A) ajouter, avant ou pendant ladite polymérisation dudit monomère ayant une liaison éthyléniquement insaturée, un antioxydant phénolique représenté par la Formule (1) suivante, qui est masqué par un composé organoaluminium, au moins l'un d'un système catalytique, d'un système de polymérisation et d'une canalisation, et effectuer ladite polymérisation de façon à ce que ledit antioxydant phénolique soit incorporé dans une quantité de 0,001 à 0,5 partie en masse par rapport à un total de 100 parties en masse dudit polymère obtenu par ladite polymérisation dudit monomère ayant une liaison éthyléniquement insaturée et dudit élastomère thermoplastique ; et
(B) malaxer à l'état fondu ledit polymère obtenu par ladite polymérisation dudit monomère ayant une liaison éthyléniquement insaturée avec ledit élastomère thermoplastique : 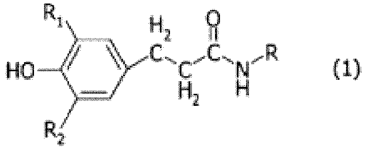 (où R₁ et R₂ représentent chacun indépendamment un atome d'hydrogène, un groupe alkyle ayant 1 à 5 atomes de carbone qui est facultativement ramifié ou un groupe arylalkyle ayant 7 à 9 atomes de carbone ; et R représente un groupe alkyle ayant 1 à 30 atomes de carbone qui est facultativement ramifié, un groupe alcényle ayant 2 à 30 atomes de carbone qui est facultativement ramifié, un groupe cycloalkyle ayant 3 à 12 atomes de carbone qui est facultativement substitué ou un groupe aryle ayant 6 à 18 atomes de carbone qui est facultativement substitué) ;
(C) mouler la composition de l'étape B sous la forme d'un article ;
dans lequel, dans ladite étape (B), ledit polymère obtenu par polymérisation dudit monomère ayant une liaison éthyléniquement insaturée et ledit élastomère thermoplastique sont malaxés à l'état fondu à un rapport massique entre ledit polymère obtenu par polymérisation dudit monomère ayant une liaison éthyléniquement insaturée/ledit élastomère thermoplastique, de 2/1 à 4/1.

2. Procédé selon la revendication 1, dans lequel ledit élastomère thermoplastique est obtenu par polymérisation d'un monomère ayant une liaison éthyléniquement insaturée, avant ou pendant laquelle polymérisation dudit monomère ayant une liaison éthyléniquement insaturée, un antioxydant phénolique représenté par ladite Formule (1), qui est masqué par un composé organoaluminium, est ajouté à au moins l'un d'un système catalytique, d'un système de polymérisation et d'une canalisation.

3. Procédé selon la revendication 1, qui comprend en outre l'étape consistant à ajouter, avant ou pendant ladite polymérisation dudit monomère ayant une liaison éthyléniquement insaturée, un antioxydant à base de phosphore à au moins l'un dudit système catalytique, dudit système de polymérisation et de ladite canalisation, de sorte que ledit antioxydant à base de phosphore est incorporé dans une quantité de 0,001 à 3 parties en masse par rapport à un total de 100 parties en masse dudit polymère obtenu par ladite polymérisation dudit monomère ayant une liaison éthyléniquement insaturée et dudit élastomère thermoplastique.

4. Procédé selon la revendication 1, dans lequel ledit composé organoaluminium est un trialkylaluminium.

5. Procédé selon l'une quelconque des revendications 1 à 4, dans lequel l'élastomère thermoplastique est un copolymère séquencé, de préférence un copolymère d'éthylène et une α-oléfine.

6. Procédé de production d'un élément revêtu, qui est **caractérisé en ce qu'**il comprend l'étape consistant à revêtir l'article moulé d'une composition à base de résine obtenue par le procédé selon la revendication 1.

7. Procédé selon la revendication 6, qui comprend l'étape consistant à soumettre ledit article moulé de ladite composition à base de résine à un traitement plasma avant ladite étape de revêtement.

8. Procédé selon l'une quelconque des revendications précédentes, dans lequel ledit monomère ayant une liaison éthyléniquement insaturée est choisi parmi l'éthylène, le propylène, le 1-butène, le 1-hexène, le 3-méthyl-1-butène, le 3-méthyl-1-pentène, le 4-méthyl-1-pentène, le vinylcycloalcane, le styrène et d'autres α-oléfines, de préférence l'éthylène ou une combinaison de monomères α-oléfiniques, plus préférablement l'éthylène seul, une combinaison d'éthylène et de propylène, une combinaison d'éthylène, de propylène et de butène, ou une combinaison d'un monomère α-oléfinique et d'un monomère diène non conjugué.

9. Procédé selon l'une quelconque des revendications précédentes, dans lequel l'antioxydant phénolique de Formule (1) est choisi parmi les composés 1 à 16 suivants :

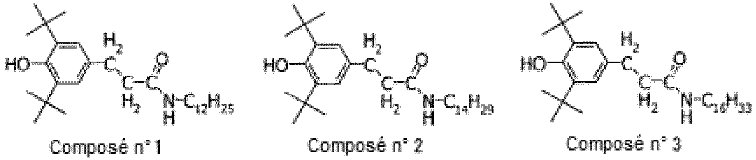

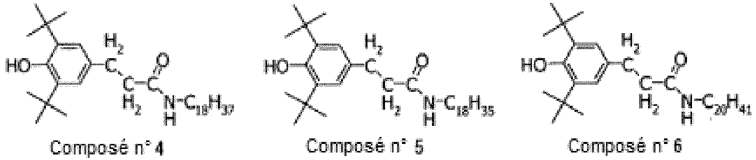

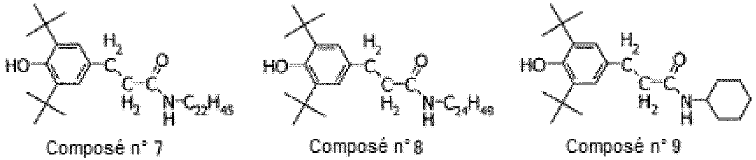

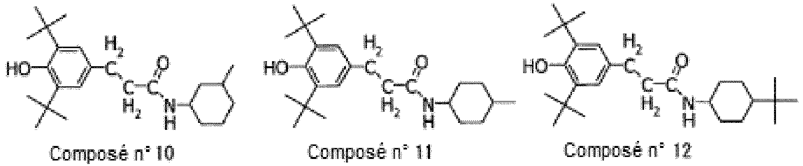

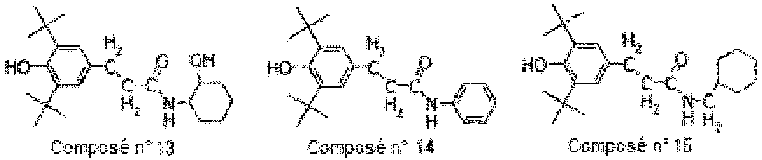

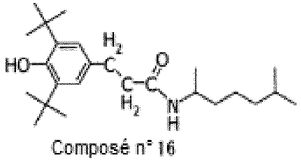

10. Procédé selon la revendication 9, dans lequel l'antioxydant phénolique et le composé n° 4.

11. Élément revêtu, **caractérisé en ce qu'**il est produit par le procédé selon la revendication 6, dans lequel la composition à base de résine comprend un photostabilisant et une charge de remplissage.
